Europäisches Patentamt

European Patent Office

Office européen des brevets

(19)

(11) **EP 0 374 436 B1**

(12) **EUROPÄISCHE PATENTSCHRIFT**

(45) Veröffentlichungstag und Bekanntmachung des Hinweises auf die Patenterteilung:
**17.04.1996 Patentblatt 1996/16**

(51) Int Cl.$^6$: **H04J 3/07**

(21) Anmeldenummer: **89120082.6**

(22) Anmeldetag: **30.10.1989**

(54) **Verfahren und Schaltungsanordnung zur Taktanpassung in der digitalen Nachrichtentechnik**

Method and circuit arrangement for clock adaptation in the digital telecommunication technique

Méthode et dispositif pour adapter la fréquence d'horloge en technique de télécommutation numérique

(84) Benannte Vertragsstaaten:
**DE FR GB IT**

(30) Priorität: **23.12.1988 DE 3843372**

(43) Veröffentlichungstag der Anmeldung:
**27.06.1990 Patentblatt 1990/26**

(73) Patentinhaber: **ANT Nachrichtentechnik GmbH**
**D-71522 Backnang (DE)**

(72) Erfinder:
• **Kaiser, Thomas, Dipl.-Ing. (FH)**
**D-7150 Backnang (DE)**

• **Mand, Siegfried, Dipl.-Ing. (FH)**
**D-7150 Backnang (DE)**
• **SCHMITZ, Johannes, Dipl. Ing.**
**D - 71522 Backnang (DE)**

(56) Entgegenhaltungen:
**EP-A- 0 227 145**          **US-A- 3 663 760**

• **NTZ ARCHIV, Heft 4, 1977, Seiten 87-91, Berlin, DE; H. STEPHANBLOME: "Signalübernahmeverfahren asynchroner Nachrichtennetze für Breitband-Digitalsignale"**
• **IBM TECHNICAL DISCLOSURE BULLETIN, Band 10, Nr. 8, Januar 1968, Seiten 1310- 1312, New York, US; A. CROISIER et al.: "PCM terminal buffer"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Schaltungsanordnung zur Taktanpassung in der digitalen Nachrichtentechnik mit Hilfe der Einfügung und Ausfügung von Stopfbits in einen Bitstrom gemäß den Oberbegriffen der Ansprüche 1, 2 und 6.

Sollen mehrere zueinander plesiochrone Digitalsignale in einer übergeordneten Einrichtung miteinander verarbeitet werden, so müssen sie an den Takt dieser übergeordneten Einrichtung angepaßt werden. Eine solche übergeordnete Einrichtung ist z.B. ein Multiplexgerät, das aus mehreren plesiochronen Digitalsignalen ein Digitalsignal einer höheren Hierarchiestufe bildet.

Bei der Umsetzung dieser höheren in eine niedrigere Hierarchiestufe müssen die genannten Taktanpassungen wieder rückgängig gemacht werden. Die erforderliche Taktanpassung geschieht durch das sogenannte positive Stopfen. Gemäß der deutschen Offenlegungsschrift 29 08 366 wird das anzupassende Digitalsignal zunächst in einen elastischen Speicher eingeschrieben und dann wieder ausgelesen. Das Auslesen geschieht mit einem Lesetakt, der aus dem Takt der höheren Hierarchiestufe gewonnen wird.

Aus Stephanblome "Signalübernahmeverfahren asynchroner Nachrichtennetze für Breitband-Digitalsignale", ntz Archiv (1979), Heft 4, Seiten 87 bis 91, ist eine Schaltungsanordnung zur Taktanpassung für einen Bitstrom aus n aufeinanderfolgenden Digitalsignalen beschrieben, mit einem Serien-Parallel-Wandler (S/P Reg.), der das anzupassende Digitalsignal in n parallele Digitalsignale umwandelt, mit einem Speicher (Puffer-Reg.) zur parallelen Speicherung der n Digitalsignale, mit einem Zusatzspeicher (Zwischenregister in Form des Ausgabe-Reg.) mit n Speicherzellen, mit einem Umschalter (in Form eines Koppelnetzes), mit einer Steuerung und mit einem ausgangsseitigen Parallel-Serien-Wandler (P/S Reg).

Bei hohen Bitraten muß der elastische Speicher in einer Schaltkreistechnik ausgeführt sein, die die erforderlichen kurzen Schaltzeiten aufweist.

Der Erfindung liegt die Aufgabe zugrunde, Verfahren und Schaltungsanordnungen der eingangs genannten Art anzugeben, welche Digitalsignale mit hoher Bitrate verarbeiten können.

Diese Aufgabe wird durch ein Verfahren und eine Schaltungsanordnung nach den Ansprüchen 1, 2 und 6 gelöst. Die abhängigen Ansprüche 3 bis 5 und 7 bis 9 geben vorteilhafte Weiterbildungen an.

Aus dem Buch von Tietze-Schenk "Halbleiter-Schaltungstechnik", achte Auflage, Abschnitt 11.4, ist es an sich bekannt, einem Datenspeicher einen Serien-Parallel-Wandler vorzuschalten und einen Parallel-Serien-Wandler nachzuschalten.

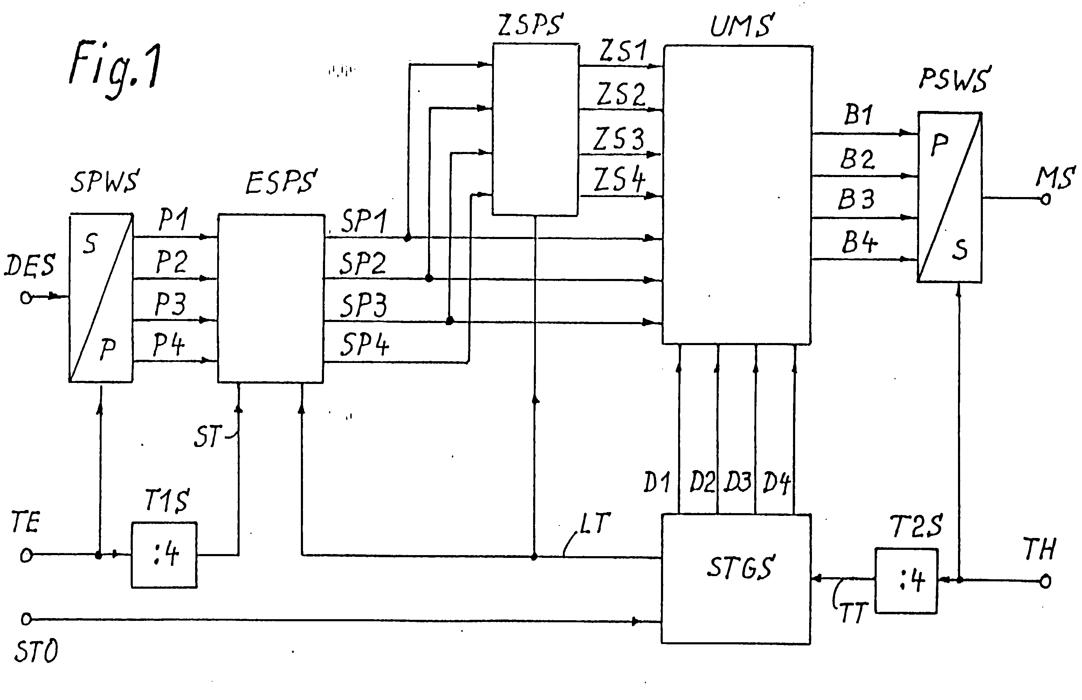

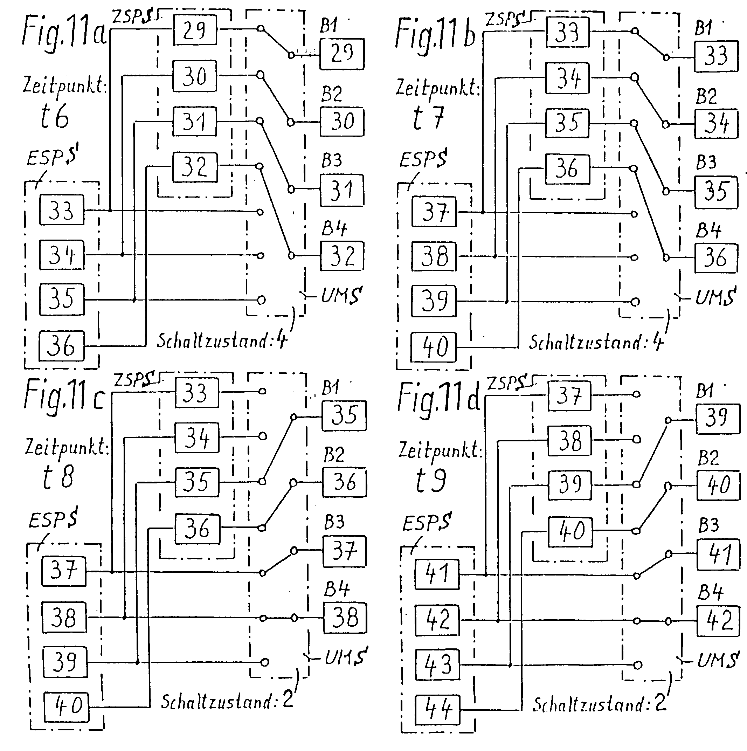

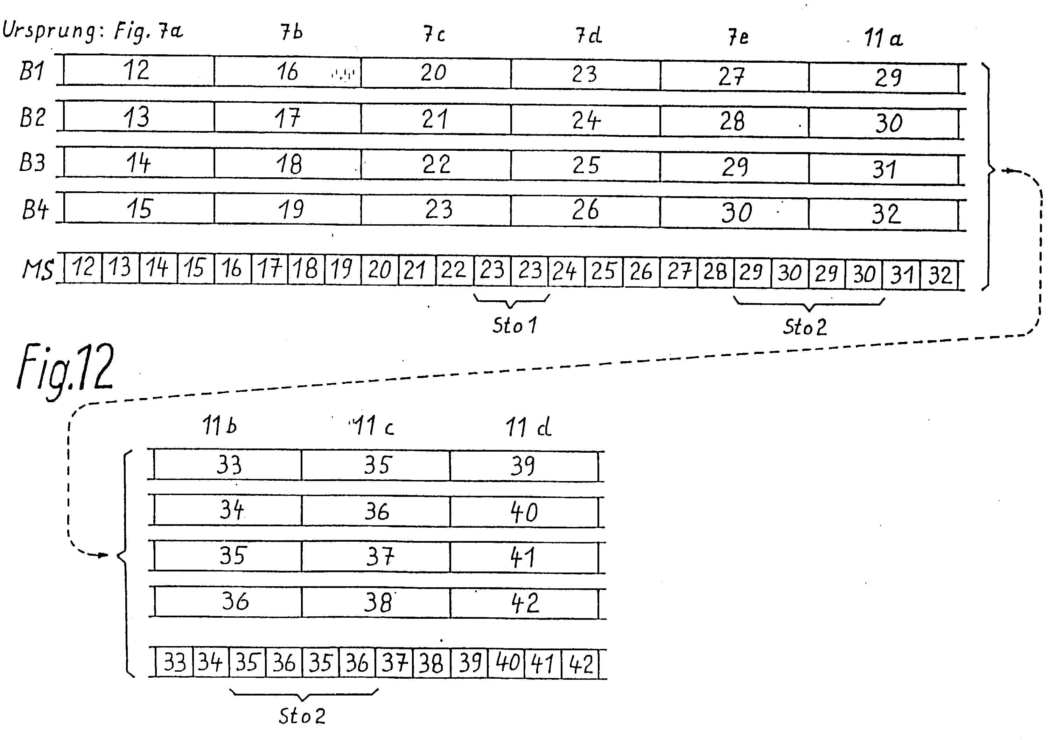

Zunächst soll die Taktanpassung durch Einfügen von Stopfbits nach der Erfindung an zwei Ausführungsbeispielen beschrieben werden. Dazu dienen die Figuren 1-13.

Es wird zunächst die Figur 1 beschrieben. Sie stellt das Blockschaltbild für das erste Ausführungsbeispiel dar. Es bedeuten:

DES : Eingangssignal, Eingang für das anzupassende Digitalsignal,
SPWS : ein Serien-Parallel-Wandler,
ESPS : ein elastischer Speicher,
ZSPS : ein Zusatzspeicher,
UMS : ein Umschalter,
PSWS : ein parallel-Serien-Wandler,
MS : Ausgang für das angepaßte Digitalsignal,
T1S,T2S : ein erster und ein zweiter Frequenzteiler,
STGS : eine Steuerung.
TE ..: Takt des zu stopfenden Eingangssignals DES
TH ..: Takt des gestopften Ausgangssignals MS
ST : Schreibtakt zum Einlesen in ESPS
LT : Lesetakt der Speicher ZSP und ESPS

Mit den an den Leitungen stehenden Bezugszeichen werden die Leitungen selbst, die Ein- und Ausgänge der durch die jeweiligen Leitungen übertragenen Signale bezeichnet.

Im Serien-Parallel-Wandler SPWS wird das Eingangssignal DES, also das anzupassende Digitalsignal in vier parallele Digitalsignale P1 ... P4 gewandelt. Der Parallelisierungsfaktor m ist also in diesem Beispiel gleich 4. Die Serien-Parallel-Wandlung wird durch den Takt THE des Eingangssignals gesteuert.

Dem Serien-Parallel-Wandler SPWS ist über die vier Leitungen P1 ... P4 der elastische Speicher ESPS nachgeschaltet. Er ist als First-In-First-Out-Memory (FIFO) ausgeführt. Solche Speicher sind in dem Buch von Tietze-Schenk "Halbleiter-Schaltungstechnik", achte Auflage, im Abschnitt 11.5 (S. 289 ... 293) beschrieben. Die vom Serien-Parallel-Wandler SPWS über die Leitungen P1 ... P4 in Parallel-Darstellung gelieferten 4-Bit-Datenwörter werden mit dem Schreibtakt ST in den elastischen Speicher eingeschrieben. Dieser Schreibtakt wird aus dem Takt TE mittels Teilung durch vier im ersten Frequenzteiler T1S gewonnen. Oder allgemein ausgedrückt, im ersten Frequenzteiler wird die Frequenz des Taktes TE durch einen Wert geteilt, der gleich dem Parallelisierungsfaktor m ist. Das Auslesen, also das Bereitstellen des jeweiligen Datenwortes an den Ausgängen SP1 bis SP4 wird durch den Lesetakt LT gesteuert. Er wird von der Steuerung STGS geliefert.

An die Ausgänge SP1 bis SP4 ist der Zusatzspeicher ZSPS angeschlossen, der auch vier (oder allgemein m) Ausgänge ZS1 bis ZS4 aufweist. Außerdem ist der Lesetakt LT an ihn herangeführt.

Dem elastischen Speicher ESPS und dem Zusatzspeicher ZSPS ist der Umschalter UMS nachgeschaltet. Er weist sieben (allgemein: 2m - 1) Eingänge auf. Die ersten vier (allgemein: m) Eingänge sind mit den Ausgängen des Zusatzspeichers verbunden. Die letzten drei (allgemein: m - 1) Eingänge sind mit den ersten drei (allgemein: m - 1) Ausgängen SP1, SP2 und SP3 des elastischen Speichers ESPS verbunden. Der Umschalter UMS weist vier (allgemein: m) Ausgänge B1 ... B4 auf. Im Umschalter werden Verbindungen von den Eingängen zu den Ausgängen durchgeschaltet. Diese Verbindungsdurchschaltung wird über die Steuerleitungen D1 ... D4 von der Steuerung STGS gesteuert.

Dem Umschalter UMS ist der Parallel-Serien-Wandler PSWS nachgeschaltet. An seinem Ausgang MS erscheint das im Takt angepaßte Digitalsignal. Diese Parallel-Serien-Wandlung wird von einem von der übergeordneten Einrichtung gelieferten Takt TH gesteuert. Die Frequenz dieses Taktes wird außerdem im zweiten Frequenzteiler T2S durch vier (allgemein: durch m) geteilt. Der so gewonnene Takt TT wird der Steuerung STGS zugeführt.

Der Steuerung STGS wird noch über die Leitung STO das Stopfkriterium STD zugeführt. Ein ja-Signal auf dieser Leitung bedeutet, daß ein Stopfbit eingefügt werden muß. Das Stopfkriterium kann durch Auswerten des Füllstandes des elastischen Speichers oder durch einen Phasenvergleich gewonnen werden.

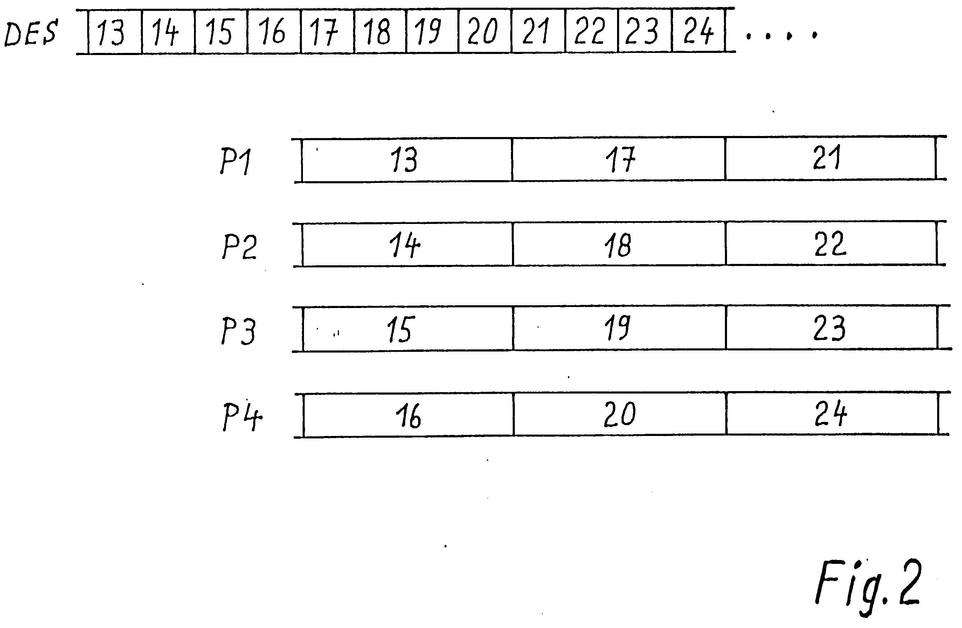

Die Funktion des Serien-Parallel-Wandlers SPWS ist in der Figur 2 dargestellt. Es wird keine Wort-, Rahmen- oder Byte-Struktur des Eingangssignals vorausgesetzt. Falls doch eine solche vorhanden ist, wird sie nicht beachtet. Deshalb sind in der Figur 2 die einzelnen Bits nur durchnumeriert. Um zu zeigen, daß nur Ausschnitte der Signale dargestellt sind, wurde willkürlich mit 13 begonnen.

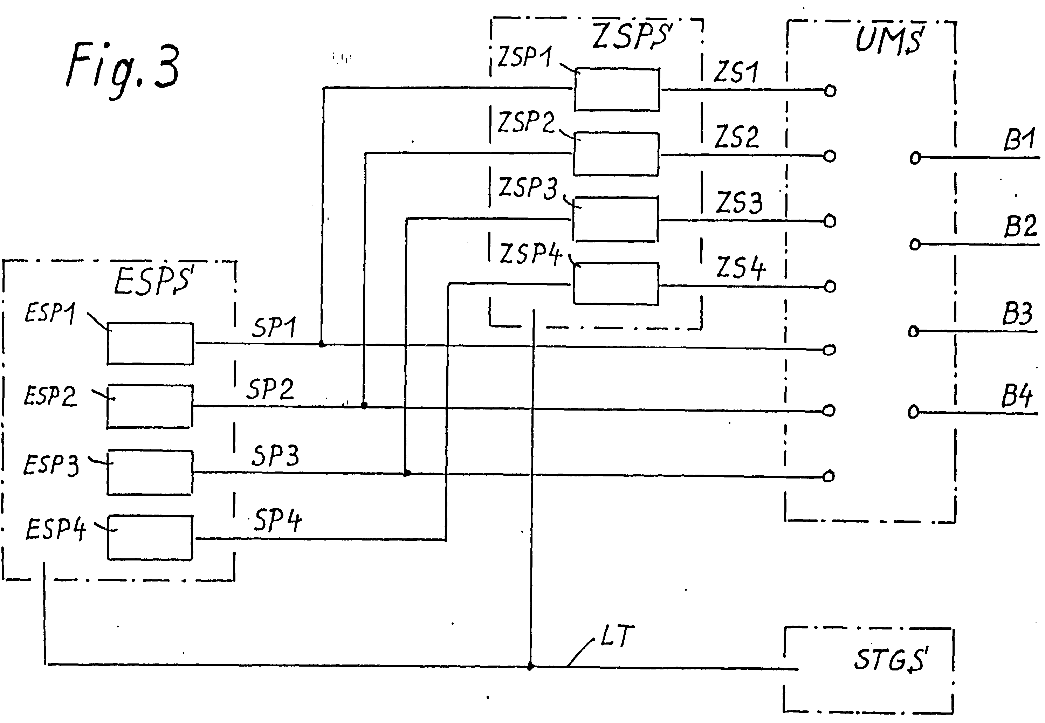

Anhand der Figur 3 werden Einzelheiten des elastischen Speichers ESPS und des Zusatzspeichers ZSPS erläutert. Der elastische Speicher arbeitet nach dem Durchlaufprinzip, siehe Tietze-Schenk, Abschnitt 11.5.1. Mit ESP1 bis ESP4 sind die vier Speicherzellen des letzten Speicherplatzes des elastischen Speichers dargestellt. Der Zusatzspeicher enthält vier (allgemein: m) Speicherzellen ZSP1 bis ZSP4.

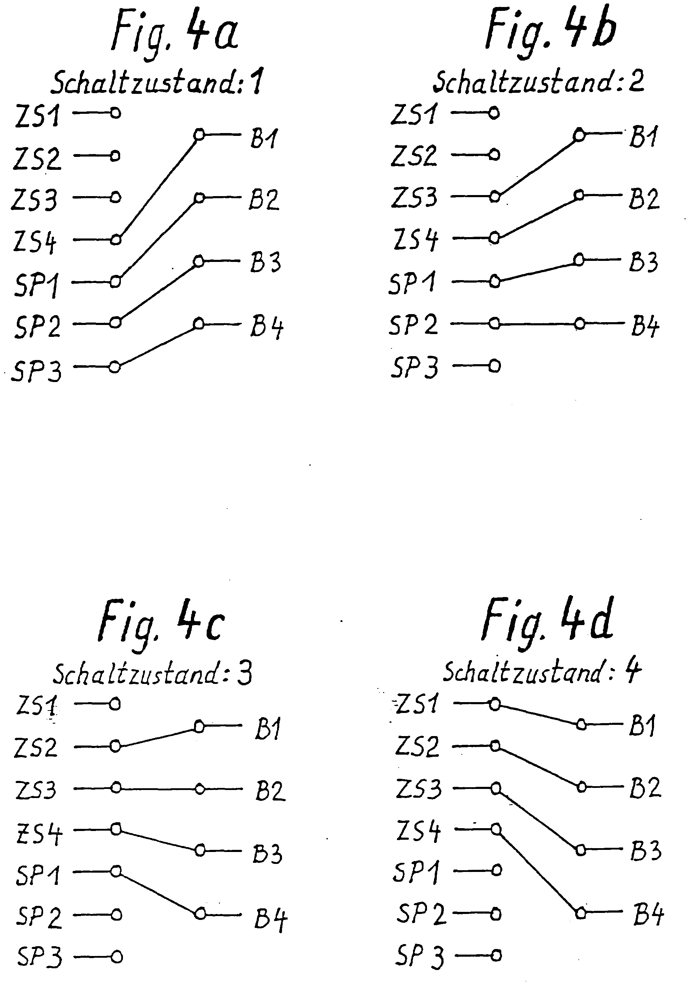

Im Umschalter UMS sind vier (allgemein: m) Schaltzustände möglich. Sie sind in den Figuren 4a bis 4d dargestellt. Der Schaltzustand 1 wird auch als Anfangszustand, der Schaltzustand 4 als Endzustand bezeichnet.

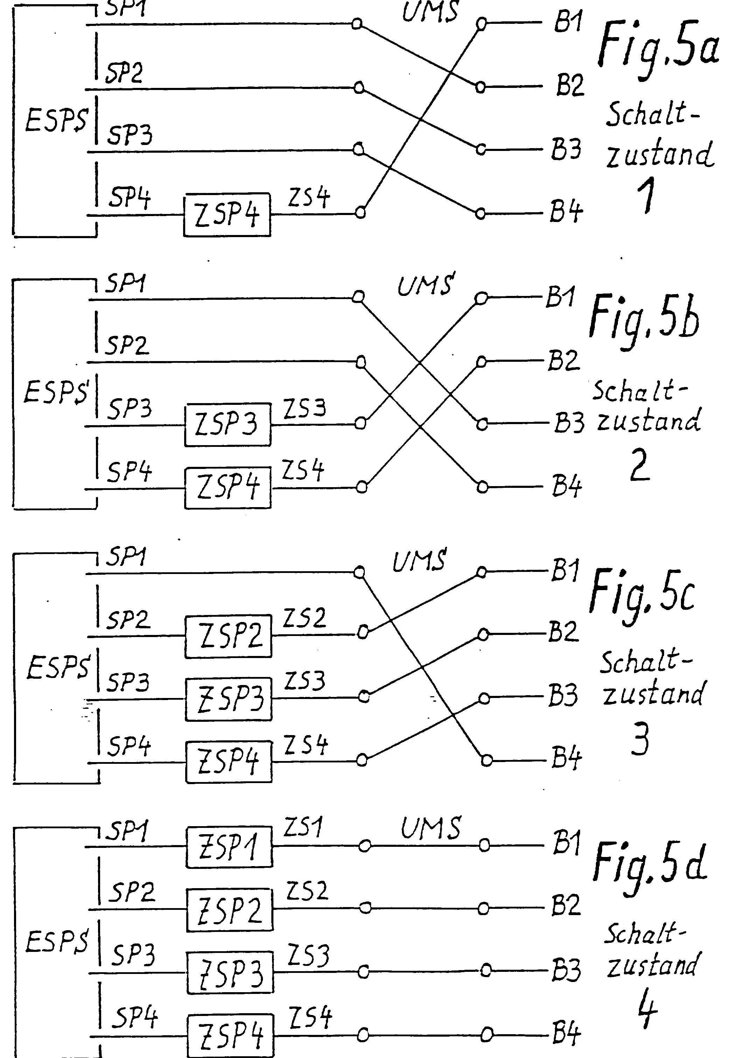

Die Funktion des Umschalters UMS wird anhand der Figuren 5a bis 5d beschrieben. Sie stellen das gleiche wie die Figuren 3 und 4a bis 4d dar, jedoch in einer anderen Weise.

Allen Schaltzuständen des Umschalters UMS ist gemeinsam, daß vier (allgemein: m) Verbindungen bestehen. Jede Verbindung verbindet einen bestimmten Ausgang des elastischen Speichers ESPS mit einem bestimmten Ausgang des Umschalters UMS. Die vier (allgemein: m) Schaltzustände unterscheiden sich durch folgende Einzelheiten:

a) Ob die Verbindungen über Speicherzellen des Zusatzspeichers ZSPS laufen oder nicht.

b) Welcher Ausgang des elastischen Speichers mit welchem Ausgang des Umschalters verbunden ist.

Im Schaltzustand 1, dem Anfangszustand, läuft nur eine der Verbindungen über eine Speicherzelle des Zusatzspeichers. In jedem nächsten Schaltzustand läuft eine weitere Verbindung über eine Speicherzelle, bis schließlich im Schaltzustand 4, dem Endzustand, alle Verbindungen über Speicherzellen im Zusatzspeicher laufen.

Läuft nur eine Verbindung über eine Speicherzelle des Zusatzspeichers, so ist es diejenige zum Ausgang SP4 (allgemein: zum letzten Ausgang) des elastischen Speichers. Laufen zwei Verbindungen über Speicherzellen des Zusatzspeichers, so sind es diejenigen zum letzten und vorletzten Ausgang des elastischen Speichers, usw.

Über welche Speicherzelle eine Verbindung läuft, ergibt sich aus der Zuordnung der Speicherzellen zu den Ausgängen des elastischen Speichers. Diese Zuordnung ist unabhängig vom jeweiligen Schaltzustand. Dem ersten Ausgang SP1 ist die erste Speicherzelle ZSP1 zugeordnet, dem zweiten Ausgang SP2 die zweite Speicherzelle ZSP2 usw.

In den Schaltzuständen 1 bis 3, (allgemein: im ersten bis vorletzten Schaltzustand) bestehen also zwei Gruppen von Verbindungen. Die erste Gruppe umfaßt diejenigen, die nicht über Speicherzellen des Zusatzspeichers laufen. Die zweite Guppe umfaßt diejenigen, die über Speicherzellen des Zusatzspeichers laufen. Die erste Gruppe von Verbindungen endet auf den letzten Ausgängen des Umschalters. Die zweite Gruppe von Verbindungen endet auf den ersten Ausgängen B1, B2 usw. des Umschalters. Innerhalb einer jeden Gruppe ist die Zuordnung der Ausgänge des elastischen Speichers zu den Ausgängen des Umschalters durch gleichsinnige Zählrichtung gekennzeichnet.

Welcher Schaltzustand jeweils besteht, wird von der Steuerung STGS bestimmt. Die Reihenfolge der Schaltzustände ist in der Tabelle 1 angegeben.

Tabelle 1

| bisheriger Schaltzustand | neuer Schaltzustand | Auslesen des nächsten Datenwortes aus dem elastischen Speicher |
|---|---|---|
| 1 | 2 | ja |
| 2 | 3 | ja |
| 3 | 4 | ja |
| 4 | 1 | nein |

Mit dem "Auslesen des nächsten Datenwortes ... " ist folgendes gemeint: Ein an den Ausgängen SP1 ... SP4 des elastischen Speichers ESPS anliegendes Datenwort wird in die Speicherzellen ZSPS eingespeichert, anschließend erscheint an den Ausgängen des elastischen Speichers das nächste Datenwort. Diese Funktion wird von einem Impuls des Lesetaktes LT bewirkt, und zwar auch dann, wenn der Umschalter seinen Schaltzustand nicht ändert.

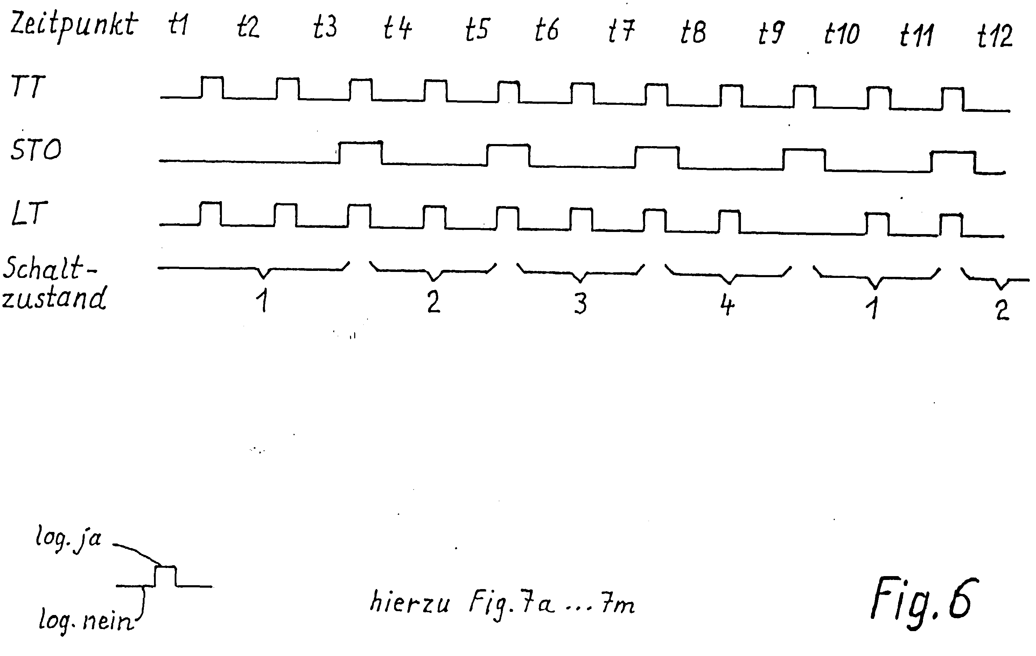

Die dieser Tabelle entsprechenden Funktionen der Steuerung STGS werden anhand der Figur 6 erläutert. Es sind die logischen Pegel des Taktes TT, auf der Leitung STO und des Lesetaktes LT angegeben, ferner die in den jeweiligen Zeitpunkten t1 bis t12 bestehenden Schaltzustände des Umschalters. Wenn die Leitung STO ja-Pegel aufweist und ein Impuls des Taktes TT auftritt, wechselt der Schaltzustand des Umschalters in der in der Tabelle 1 angegebenen Reihenfolge. Das ja-Signal auf der Leitung STO darf schon vor und nach dem zugehörigen Taktimpuls auftreten.

In der Steuerung STGS wird aus dem Takt TT der Lesetakt LT gewonnen. Laut Tabelle 1 soll beim Wechsel vom Schaltzustand 4 (also dem Endzustand) in den Schaltzustand 1 (dem Anfangszustand) das Auslesen des nächsten Datenwortes unterbleiben. Dies wird von der Steuerung bewirkt, indem sie in diesem Fall in den Lesetakt LT eine Lücke einfügt oder anders ausgedrückt, einen Taktimpuls ausblendet. Dieser Vorgang ist in der Figur 6 zwischen den Zeitpunkten t9 und t10 dargestellt.

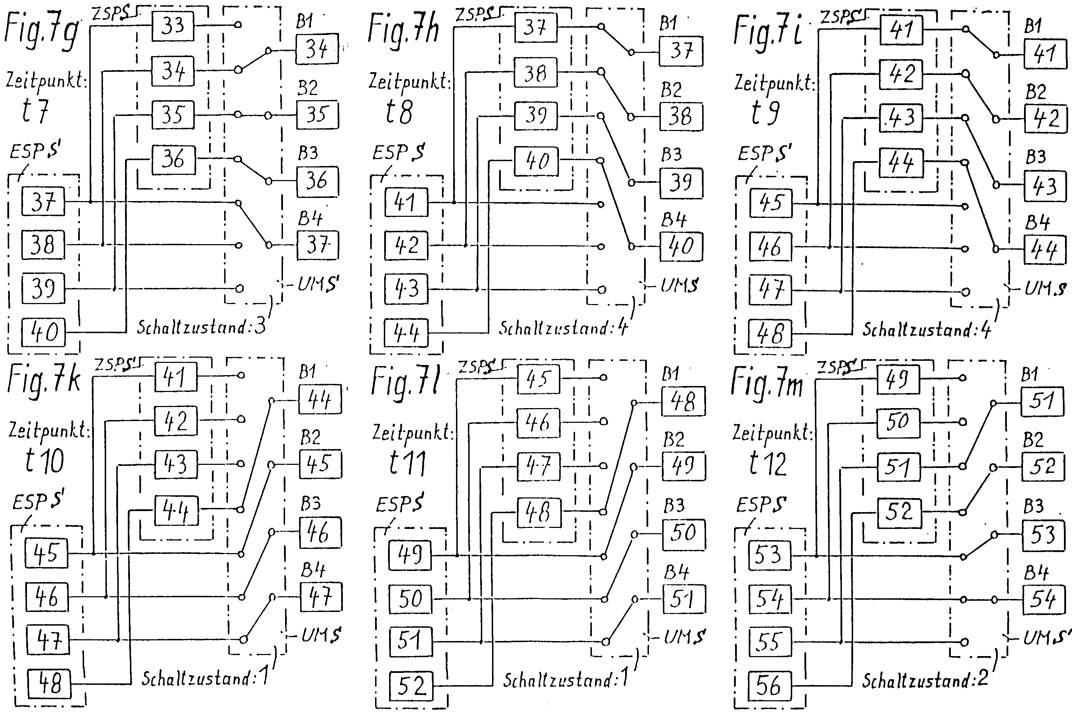

In jeder Figur 7a bis 7m sind die vier Speicherzellen des letzten Speicherplatzes des elastischen Speichers ESPS sowie die vier Speicherzellen des Zusatzspeichers ZSPS dargestellt. Ferner ist der jeweilige Schaltzustand im Umschalter UMS dargestellt. Mit B1 bis B4 sind wieder die Ausgänge des Umschalters bezeichnet. In die die Speicherzellen sowie die Ausgänge des Umschalters darstellenden Rechtecke sind Ziffern eingetragen, welche einzelne Bits aus dem Eingangssignal DE bezeichnen, siehe auch Figur 2. Zu jedem der in der Figur 6 angegebenen Zeitpunkte t1 bis t12 gehört eine der Figuren 7a bis 7m.

In der Figur 7a ist dargestellt, daß das aus den Bits 13 bis 16 bestehende Datenwort bis in den letzten Speicherplatz des elastischen Speichers ESPS vorgerückt ist. Das vorangegangene, aus den Bits 9 bis 12 bestehende Datenwort steht schon in den Speicherzellen des Zusatzspeichers. Unter Berücksichtigung des im Umschalter UMS bestehenden Schaltzustandes erscheint an den Ausgängen B1 bis B4 ein aus den Bits 12 bis 15 bestehendes Datenwort.

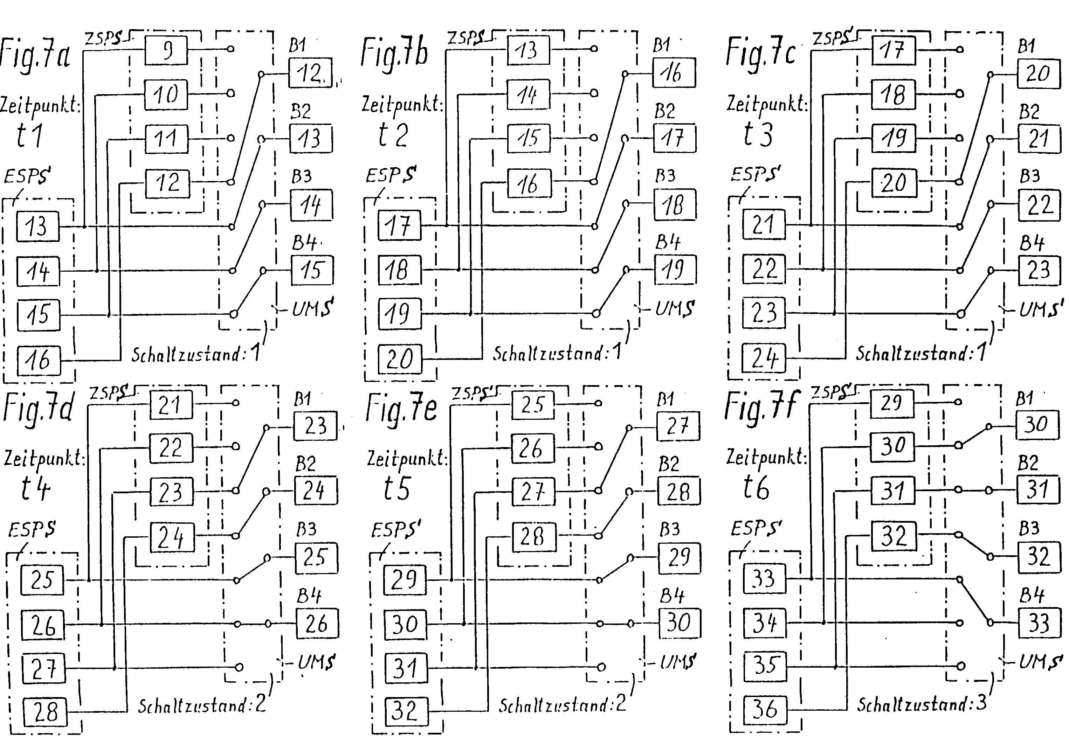

Nach dem Zeitpunkt t1 tritt ein Impuls des Lesetaktes LT auf, siehe Figur 6. Durch ihn wird bewirkt, daß das aus den Bits 13 bis 16 bestehende Datenwort aus dem elastischen Speicher ausgelesen und in die Speicherzellen des Zusatzspeichers eingespeichert wird. Gleichzeitig wird das nächste, aus den Bits 17 bis 20 bestehende Datenwort in den letzten Speicherplatz des elastischen Speichers geschoben. Der so entstandene neue Zustand ist in Figur 7b dargestellt. Am Ausgang des Umschalters steht jetzt ein aus den Bits 16 bis 19 bestehendes Datenwort. Das gleiche geschieht zwischen den Zeitpunkten t2 und t3. Der sich so ergebende neue Zustand ist in der Figur 7c dargestellt.

Zwischen den Zeitpunkten t3 und t4 wird nicht nur das nächste Datenwort ausgelesen und in den Zusatzspeicher eingespeichert, sondern der Umschalter wechselt wegen des ja-Signals des Stopfkriteriums STO seinen Schaltzustand, siehe Figur 7d. In den Figuren 7e bis 7i sind weitere der zuvor beschriebenen Vorgänge dargestellt. Es müssen sich Auslesen sowie Einspeichern ohne Wechsel des Schaltzustandes und Auslesen sowie Einspeichern mit Wechsel des Schaltzustandes nicht in der dargestellten Weise abwechseln. Es kann der Schaltzustand des Umschalters beliebig oft beibehalten werden. Andererseits kann der Schaltzustand des Umschalters aber auch unmittelbar aufeinander folgend geändert werden.

Zwischen den Zeitpunkten t9 und t10 unterbleibt das Auslesen und Einspeichern. In der Figur 7k ist also dargestellt, daß im Zeitpunkt t10 noch dieselben Bits in den Speichern stehen wie im Zeitpunkt t9. Da aber der Umschalter seinen Schaltzustand geändert hat, erscheint an seinen Ausgängen ein anderes Datenwort.

In den Figuren 7l und 7m ist dargestellt, wie dann weitere, schon beschriebene Vorgänge folgen.

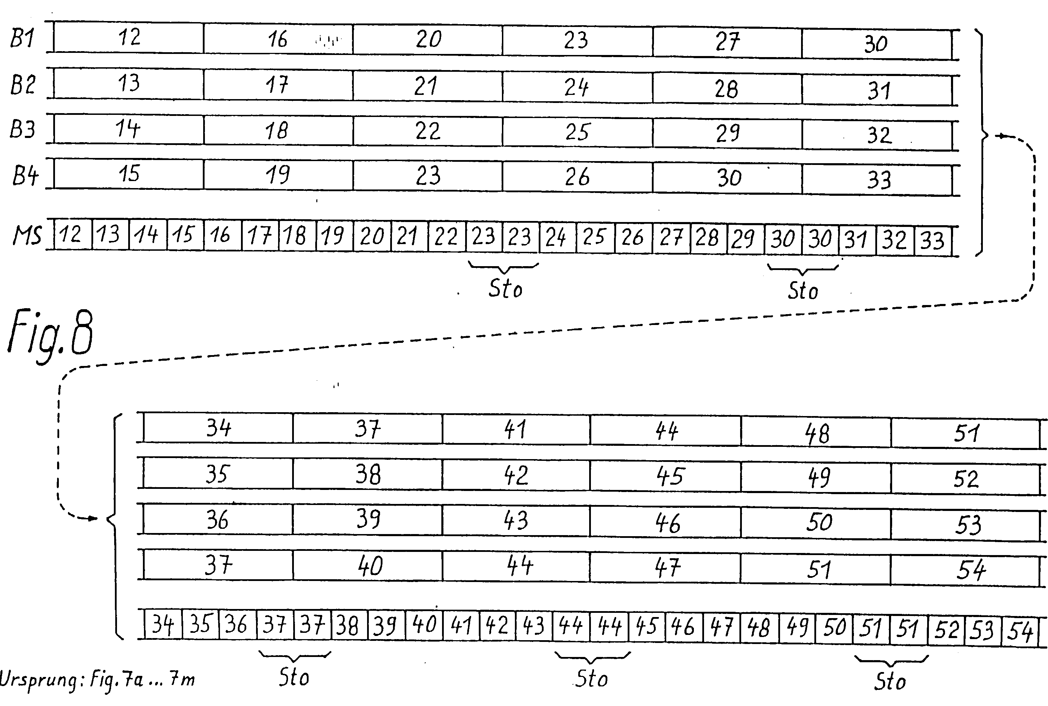

Es wird nun die Figur 8 beschrieben. In ihr sind in den Zeilen B1 bis B4 die gemäß den Figuren 7a bis 7m an den Ausgängen B1 bis B4 des Umschalters UMS nacheinanderauftretenden Datenwörter eingetragen. Aus diesen vier parallelen Digitalsignalen B1 bis B4 bildet der Parallel-Serien-Wandler PSWS durch bitweise Verschachtelung ein serielles Digitalsignal, welches in der Zeile MS dargestellt ist und vom Parallel-Serien-Wandler über seinen Ausgang MS an die übergeordnete Einrichtung abgegeben wird. An den mit STO bezeichneten Stellen wird jeweils ein Bit wiederholt. Diese Wiederholung tritt immer dann auf, wenn der Umschalter UMS von einem Schaltzustand in den nächsten wechselt. Durch die Wiederholung eines Bits wird also ein Stopfbit eingefügt und so das Digitalsignal an den Takt der übergeordneten Einrichtung angepaßt.

Dem Patentanspruch 8 liegt die Aufgabe zugrunde, die Schaltungsanordnung nach dem Patentanspruch 6 so weiterzubilden, daß nicht nur jeweils ein Stopfbit, sondern unmittelbar aufeinanderfolgend mehrere Stopfbits eingefügt werden können.

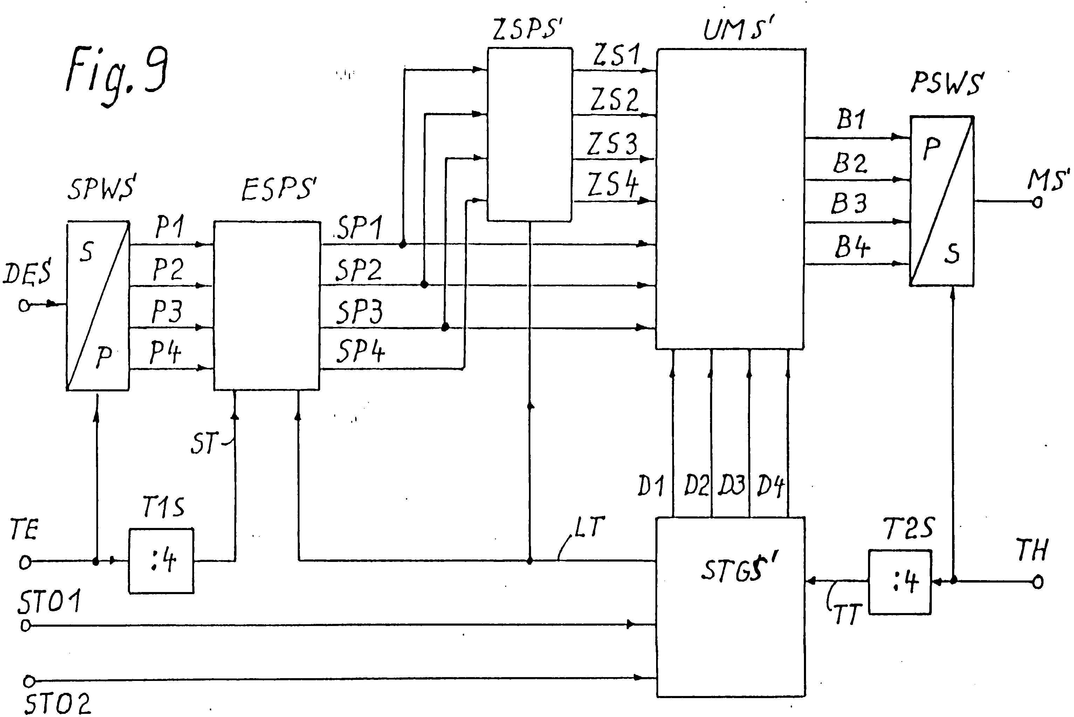

Das zugehörige Ausführungsbeispiel wird anhand der aufgeführten Figuren beschrieben. Es wird zunächst die Figur 9 betrachtet. Sie unterscheidet sich von der Figur 1 dadurch, daß die Steuerung mit STGS′ bezeichnet ist und zwei Leitungen STO1 und STO2 für Stopfkriterien vorgesehen sind. Die Steuerung STGS′ ist so ausgebildet, daß die Funktionen gemäß der Tabelle 2 ausgeführt werden.

Tabelle 2:

| STO1 | STO2 | |
|---|---|---|
| | | nicht stopfen |
| x | | ein Bit stopfen |
| x | x | zwei Bit stopfen |

x = logisch ja

Im übrigen gilt der Text zur Figur 1 auch für die Figur 9.

Die Reihenfolge der Schaltzustände ist in der Tabelle 3 angegeben.

Tabelle 3:

| bisheriger Schaltzustand | neuer Schaltzustand | Auslesen des nächsten Datenwortes aus dem elastischen Speicher |
|---|---|---|
| 1 | 2 | ja |
| 2 | 3 | ja |
| 3 | 4 | ja |
| 4 | 1 | nein |
| 1 | 3 | ja |
| 2 | 4 | ja |
| 3 | 1 | nein |
| 4 | 2 | nein |

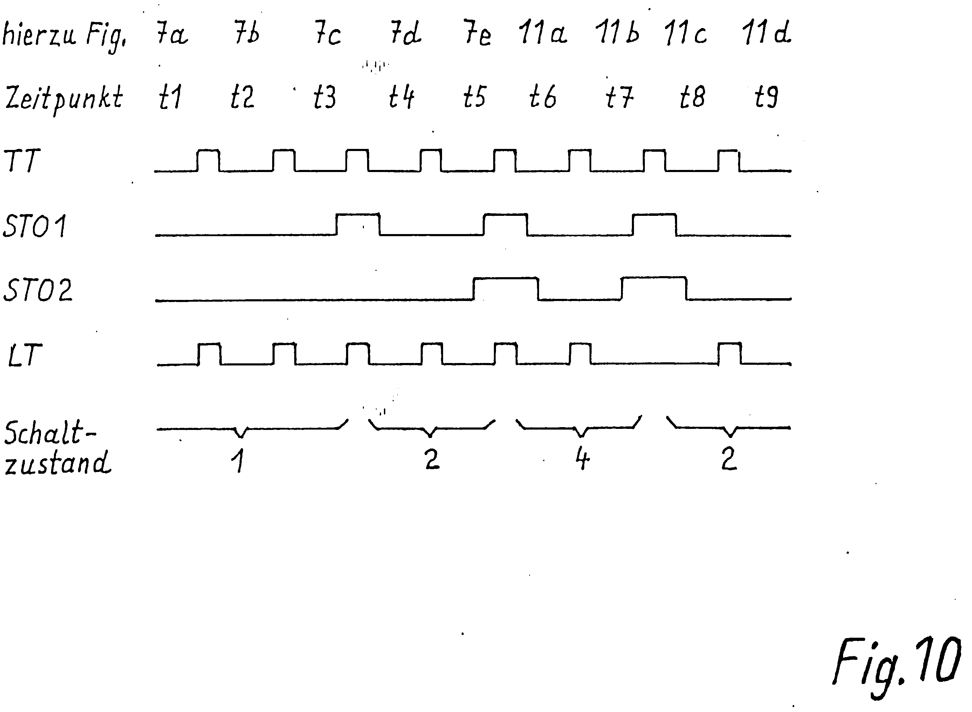

Die entsprechenden Funktionen der Steuerung STGS' werden anhand der Figur 10 erläutert. Sie ist ähnlich wie die Figur 6 gestaltet, so daß der Text zur Figur 6 hier sinngemäß gilt. Die Stopfkriterien müssen gleichzeitig mit dem zugehörigen Impuls des Taktes TT auftreten, sie dürfen aber schon zu unterschiedlichen Zeiten vorher beginnen und nachher enden.

Die zu den einzelnen Zeitpunkten t1 bis t9 auftretenden Datenwörter sind in den Figuren 7a bis 7e und 11a bis 11d dargestellt. Aus diesen Figuren wurde die Figur 12 gewonnen. An der mit STO1 bezeichneten Stelle wird ein Bit wiederholt. An den mit STO2 bezeichneten Stellen werden jeweils zwei Bits wiederholt.

Sollen mehr als zwei Bits gestopft werden, so muß die Steuerung so gestaltet werden, daß der Umschalter um entsprechend viele Schritte in den jeweiligen neuen Schaltzustand versetzt wird.

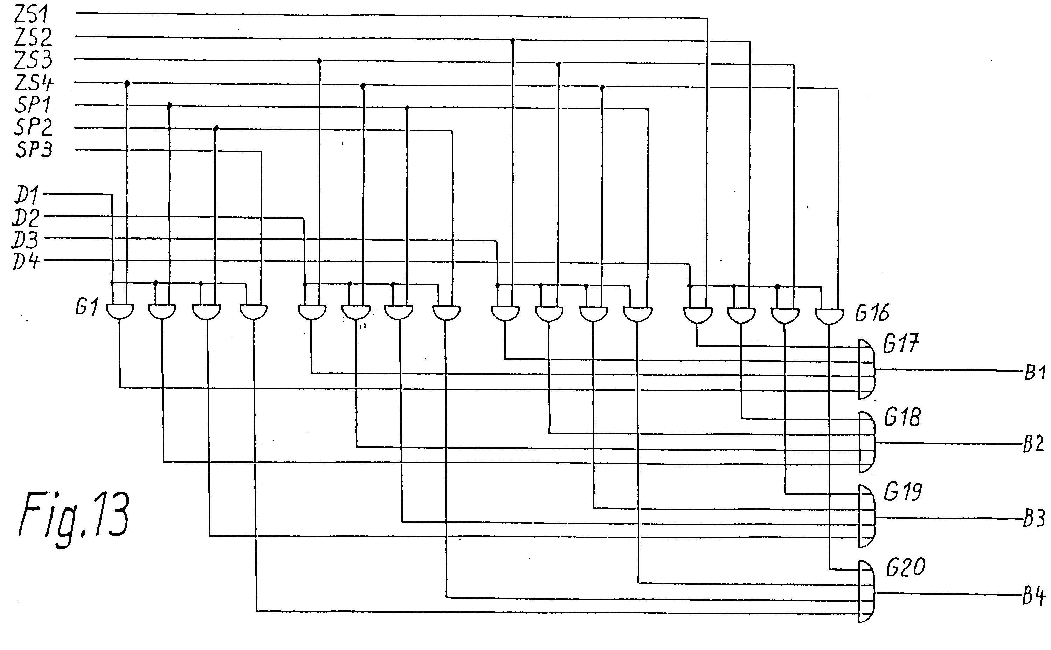

Anhand der Figur 13 wird eine Ausführungsform des Umschalters UMS beschrieben. Es wird in allen zwei Ausführungsbeispielen der gleiche Umschalter verwendet. Der Umschalter weist 16 (allgemein: m·m) Und-Schaltungen G1 ... G16 auf, die in vier (allgemein: m) Gruppen zu je vier (allgemein: m) Stück geordnet sind. Jede Und-Schaltung weist einen ersten und einen zweiten Eingang auf. Die jeweils ersten Eingänge sind innerhalb einer Gruppe miteinander und mit einem der Steuereingänge D1 bis D4 verbunden. Durch logische ja-Signale an diesen Steuereingängen werden die jeweiligen Schaltzustände hergestellt. Die Zuordnung ist in der Tabelle 4 angegeben.

Tabelle 4:

| Schaltzustand | D1 | D2 | D3 | D4 |
|---|---|---|---|---|
| 1 | x | | | |
| 2 | | x | | |
| 3 | | | x | |
| 4 | | | | x |

x = logisch ja

Die jeweils zweiten Eingänge der Und-Schalter sind mit den Eingängen ZS1 ... ZS4 und SP1 ... SP3 verbunden. Die Ausgänge der Und-Schaltungen G1 bis G16 sind über vier (allgemein: m) Oder-Schaltungen G17 ... G20 mit den Ausgängen B1 ... B4 des Umschalters UMS verbunden. Jede Oder-Schaltung weist vier (allgemein: m) Eingänge auf. So wird erreicht, daß im jeweiligen Schaltzustand die in den Figuren 4a bis 4d angegebenen Verbindungen bestehen.

Nachdem die Taktanpassung durch Einfügen von Stopfbits nach der Erfindung erläutert wurde, soll jetzt die umgekehrte Taktanpassung durch Ausfügen der Stopfbits beschrieben werden.

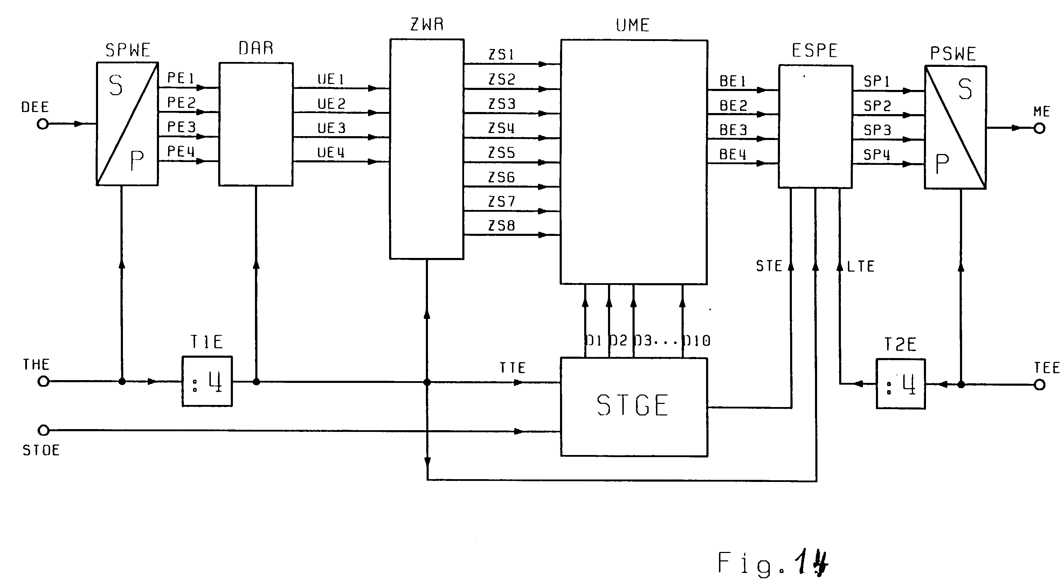

Figur 14 stellt ein Blockschaltbild einer Schaltungsanordnung zum Durchführen des "Entstopf "-Verfahrens dar. Es bedeuten:

DEE : Eingangssignal, Eingang für das anzupassende, zu "entstopfende" Digitalsignal,
DAR : ein Datenausrichter,
SPWE : ein Serien-Parallel-Wandler,
ZWR : kombinierter Speicher,
UME : ein Umschalter,
ESPE : ein elastischer Speicher,
PSWE : ein Parallel-Serien-Wandler,
ME : Ausgang für das angepaßte Digitalsignal,
T1E,T2E : ein erster und ein zweiter Frequenzteiler,
STGE : eine Steuerung.

Mit den an den Leitungen stehenden Bezugszeichen werden die Leitungen selbst, die Ein- und Ausgänge der durch die jeweiligen Leitungen verbundenen Baugruppen sowie die auf den Leitungen übertragenen Signale bezeichnet.

Im Serien-Parallel-Wandler SPWE wird das Eingangssignal DEE, also das zu "entstopfende", Digitalsignal in vier parallele Digitalsignale PE1 ... PE4 gewandelt. Der Parallelisierungsfaktor m ist in diesem Beispiel wiederum gleich 4. Die Serien-Parallel-Wandlung wird durch den Takt THE des Eingangssignals gesteuert.

Dem Serien-Parallel-Wandler SPWE ist ein Datenausrichter DAR nachgeschaltet, der bewirkt, daß der Datenstrom in einer vorgegebenen Ordnung an seinen Ausgängen erscheint.

Diesem Datenausrichter DAR folgt über die vier Leitungen UE1 ... UE4 der kombinierte Speicher ZWR. Er ist als First-In-First-Out-Memory (FIFO) ausgeführt. Solche Speicher sind in dem Buch von Tietze-Schenk "Halbleiter-Schaltungstechnik", achte Auflage, im Abschnitt 11.5 (S. 289 ... 293) beschrieben. Die vom Serien-Parallel-Wandler SPWE über die Leitungen PE1 ... PE4 in Parallel-Darstellung gelieferten 4-Bit-Datenwörter werden mit dem Takt TTE in den kombinierten Speicher eingeschrieben. Dieser Takt wird aus dem Takt THE mittels Teilung durch 4 im ersten Frequenzteiler T1E gewonnen. Oder allgemein ausgedrückt, im ersten Frequenzteiler wird die Frequenz des Taktes THE durch einen Wert geteilt, der gleich dem Parallelisierungsfaktor m ist. Das Auslesen, also das Bereitstellen des jeweiligen Datenwortes an den Ausgängen des kombinierten Speichers wird ebenfalls durch den Takt TTE gesteuert. Das Einlesen in den elastischen Speicher wird durch den Schreibtakt STE gesteuert. Er wird von der Steuerung STGE geliefert. Im folgenden wird die Zahl der vorhandenen Stopfbits mit p bezeichnet.

Der kombinierte Speicher weist 8 (allgemein: 2(m-1)+p) Ausgänge auf, an denen ausgelesen wird. Diese 8 Ausgänge führen auf den Umschalter UME. Die ersten vier (allgemein: m) Eingänge sind mit den Ausgängen des letzten des kombinierten Speichers verbunden. Die letzen vier (allgemein: m) Eingänge sind mit den vier (allgemein: m) Ausgängen des vorletzten des kombinierten Speichers ZWR verbunden. Der Umschalter UME weist vier (allgemein: m) Ausgänge BE1 ... BE4 auf. Im Umschalter werden Verbindungen von den Eingängen zu den Ausgängen durchgeschaltet. Diese Verbindungsdurchschaltung wird über die Steuerleitungen D1 ... D10 von der Steuerung STGE gesteuert.

Dem Umschalter UME ist der elastische Speicher ESPE und diesem der Parallel-Serien-Wandler PSWE nachgeschaltet. An seinem Ausgang NE erscheint das im Takt angepaßte Digitalsignal d.h. das Digitalsignal ohne Stopfbits. Diese Parallel-Serien-Wandlung wird von einem von der übergeordneten Einrichtung gelieferten Takt TEE gesteuert.

Die Frequenz dieses Taktes wird außerdem im zweiten Frequenzteiler T2E durch vier (allgemein: durch m) geteilt. Der so gewonnene Takt LTE wird dem elastischen Speicher als Lesetakt LTE zugeführt.

Der Steuerung STGE wird noch über die Leitung STOE das Entstopfkriterium STOE zugeführt. Dieses Entstopfkriterium wird gewonnen durch Auswerten einer Rahmeninformation über das Vorhandensein und einer Systeminformation über den Ort der Stopfbits.

Die grundsätzliche Funktion eines Serien-Parallel-Wandlers wie SPWE ist bereits in der Figur 2 dargestellt.

Der kombinierte Speicher arbeitet nach dem Durchlaufprinzip, siehe Tietze-Schenk, Abschnitt 11.5.1. Der kombinierte Speicher ZWR enthält 8 (allgemein: 2(m-1)+p) Speicherzellen.

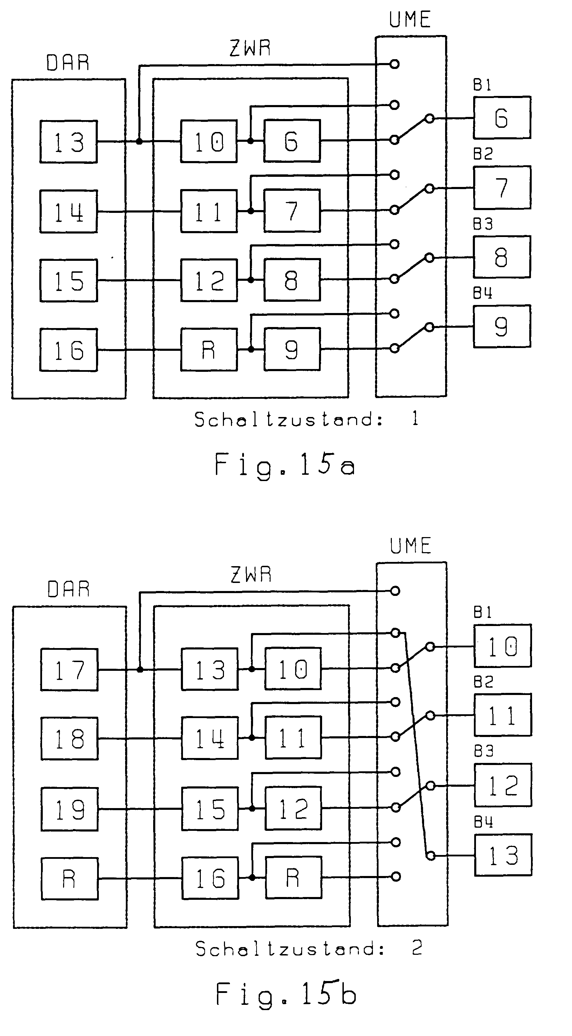

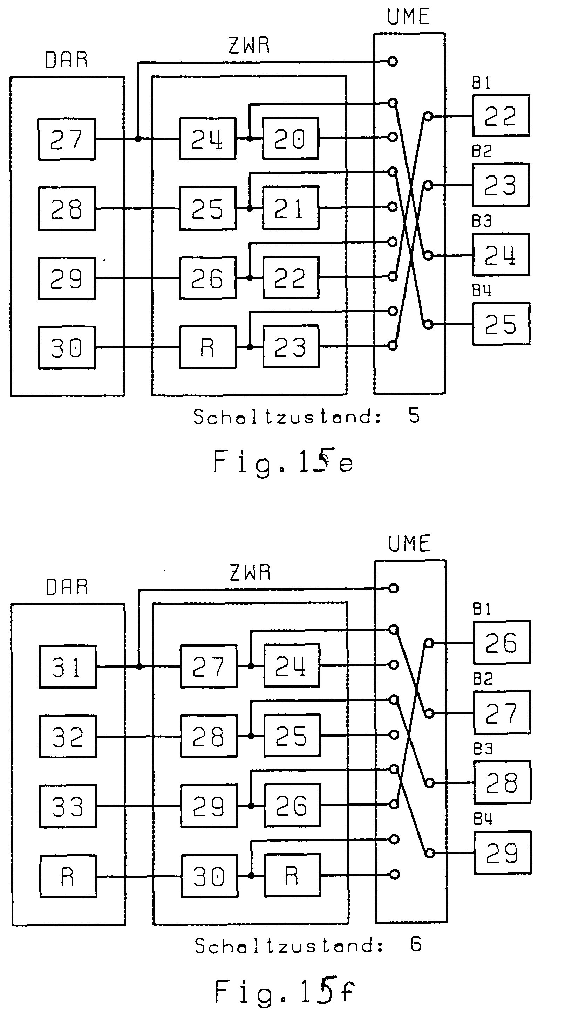

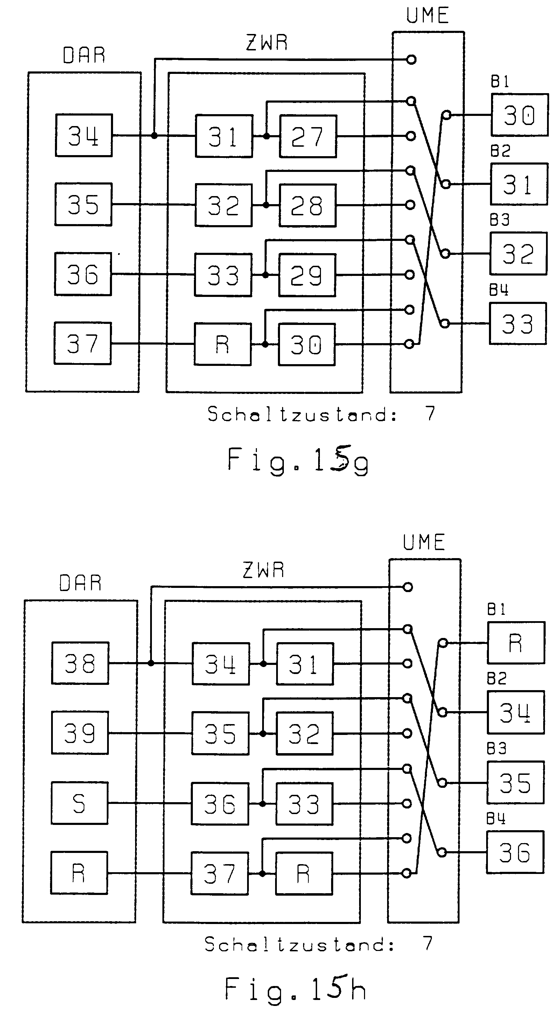

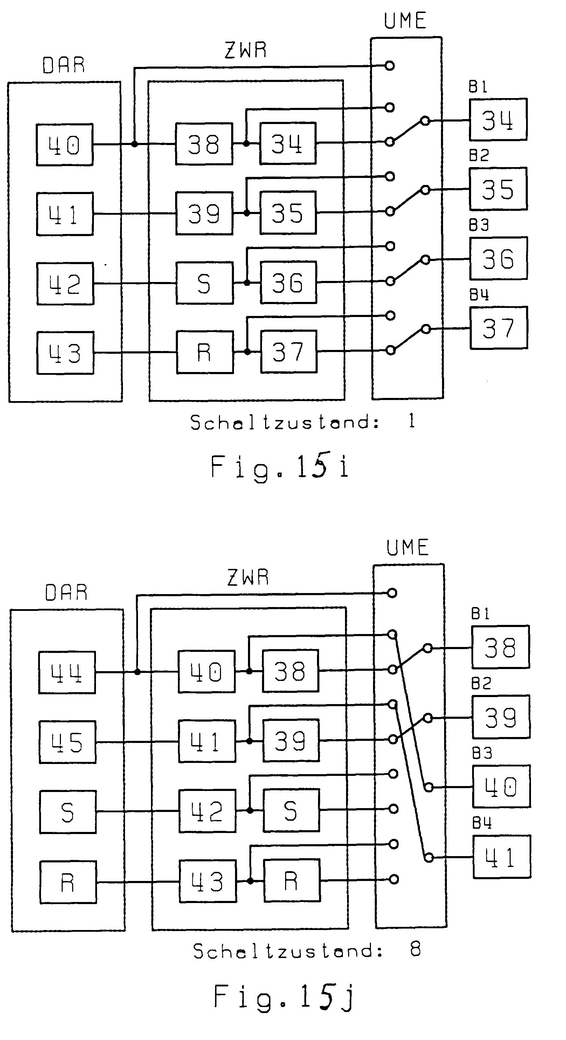

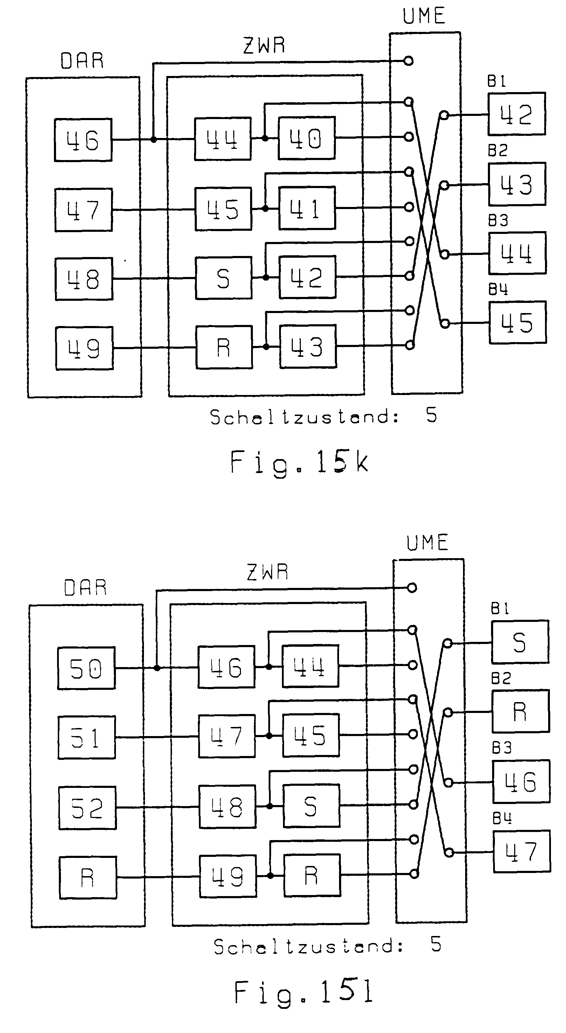

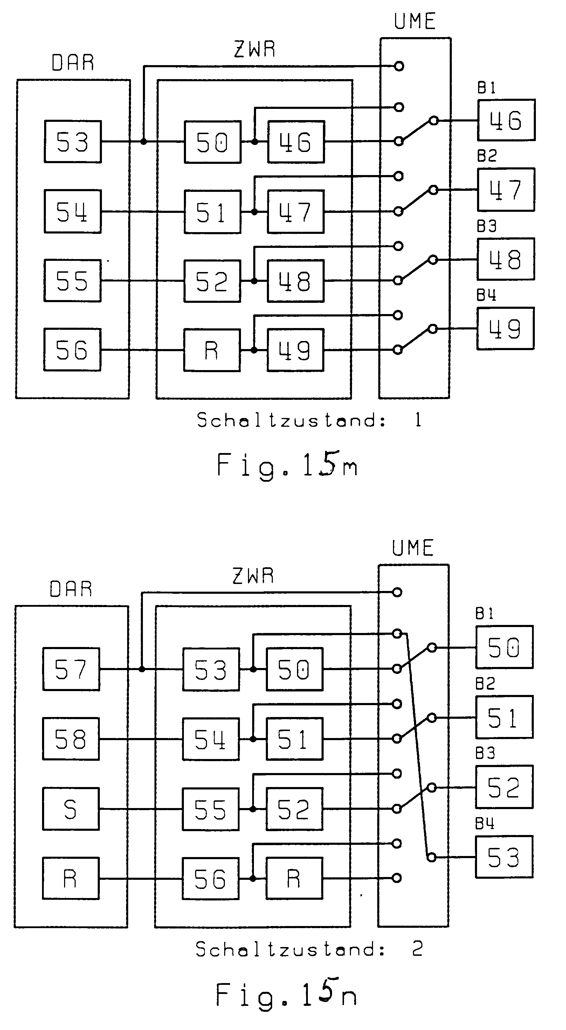

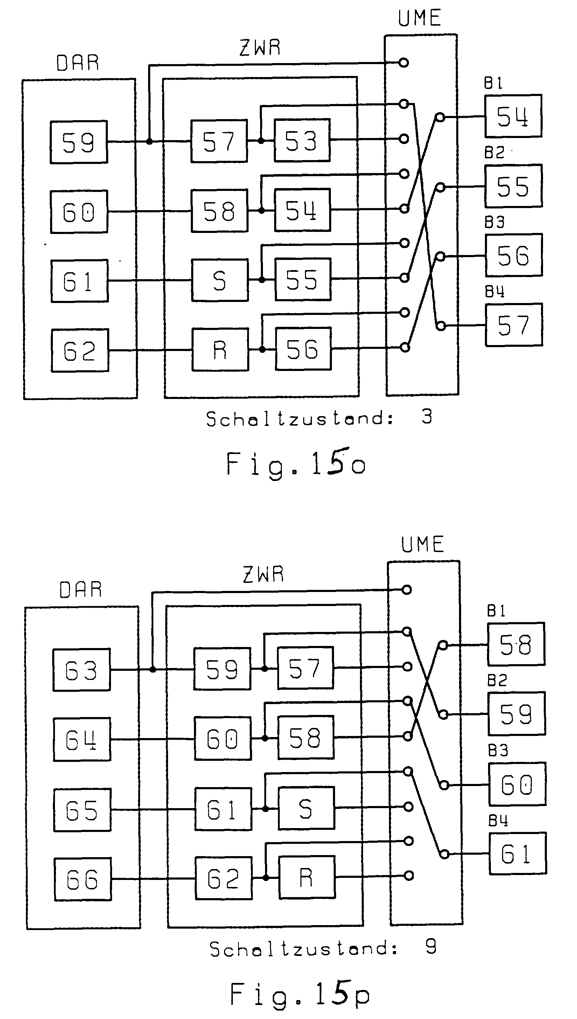

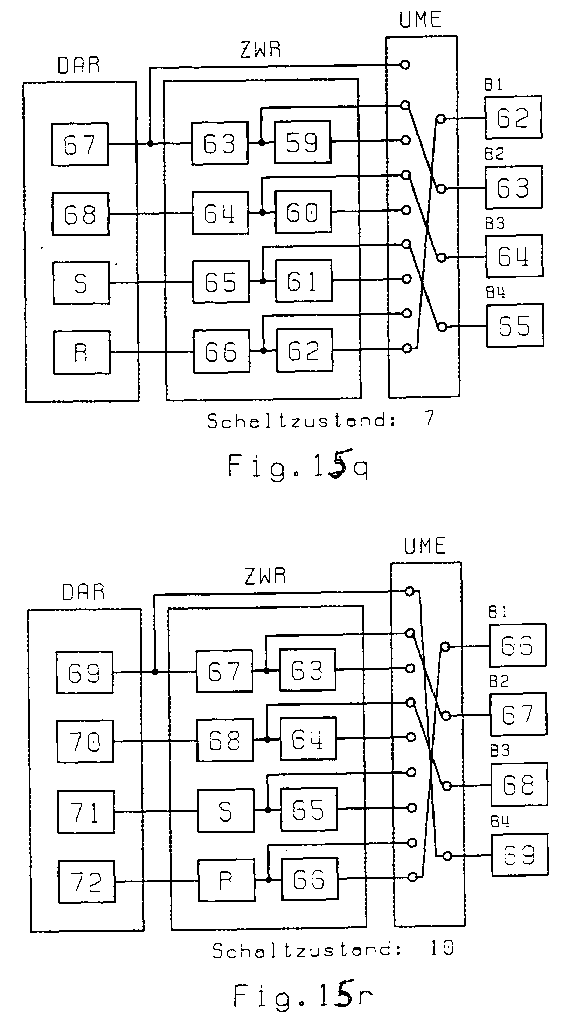

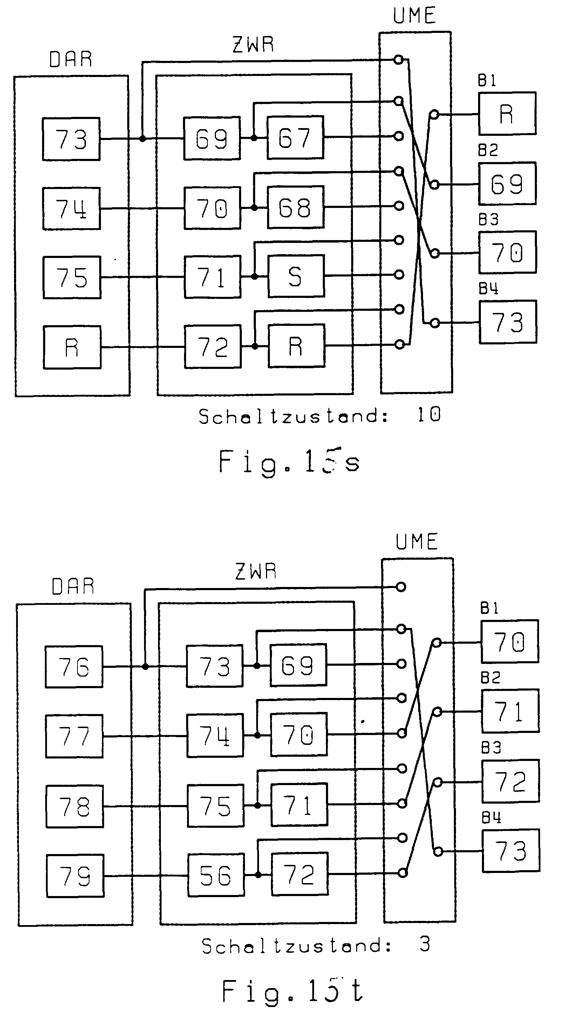

Im Umschalter UME sind 10 (allgemein: (p+1)·m-p) Schaltzustände möglich. Sie sind in den Figuren 15a bis 15t dargestellt.

Die Funktion des Umschalters UME wurde prinzipiell bereits anhand der Figuren 5a bis 5d beschrieben.

Allen Schaltzuständen des Umschalters UME ist gemeinsam, daß vier (allgemein: m) Verbindungen bestehen. Jede Verbindung verbindet einen bestimmten Ausgang des kombinierten Speichers ZWR mit einem bestimmten Ausgang des Umschalters UME.

Welcher Schaltzustand jeweils besteht, wird von der Steuerung STGE bestimmt. Die Reihenfolge der Schaltzustände ist in der Tabelle 5 angegeben und zwar zunächst für das Auftreten eines Stopfbits pro Datenwort.

Tabelle 5:

| bisheriger Schaltzustand | neuer Fig. Schaltzustand | | Fig. | Einlesen des nächsten Datenwortes in den elastischen Speicher |
|---|---|---|---|---|
| 1 | 15a | 2 | 15b | ja |
| 2 | 15b | 3 | 15c | ja |
| 3 | 15c | 4 | 15d | ja |
| 4 | 15d | 5 | 15e | ja |
| 5 | 15e | 6 | 15f | ja |
| 6 | 15f | 7 | 15g | ja |
| 7 | 15g | 7 | 15h | nein |
| 7 | 15h | 1 | 15i | ja |

In jeder Figur 15a bis 15t sind die Speicherbänke des kombinierten Speichers dargestellt. Dabei ist die erste Speicherbank des kombinierten Speichers gleichzeitig das Ausgangsregister des Datenausrichters DAR. Ferner ist der jeweilige Schaltzustand im Umschalter UME dargestellt. Mit BE1 bis BE4 sind wieder die Ausgänge des Umschalters bezeichnet. In die die Speicherzellen sowie die Ausgänge des Umschalters darstellenden Rechtecke sind Ziffern eingetragen, welche einzelne Bits aus dem Eingangssignal DEE bezeichnen.

In der Figur 15a ist dargestellt, daß das aus den Bits 13 bis 16 bestehende Datenwort bis in die erste Speicherbank des kombinierten Speichers ZWR vorgerückt ist. Die vorangegangenen, aus den Bits 6 bis 12 bestehenden Datenwöter stehen schon in der zweiten bzw. dritten Speicherbank. Unter Berücksichtigung des im Umschalter UME bestehenden Schaltzustandes erscheint an den Ausgängen BE1 bis BE4 ein aus den Bits 6 bis 9 bestehendes Datenwort.

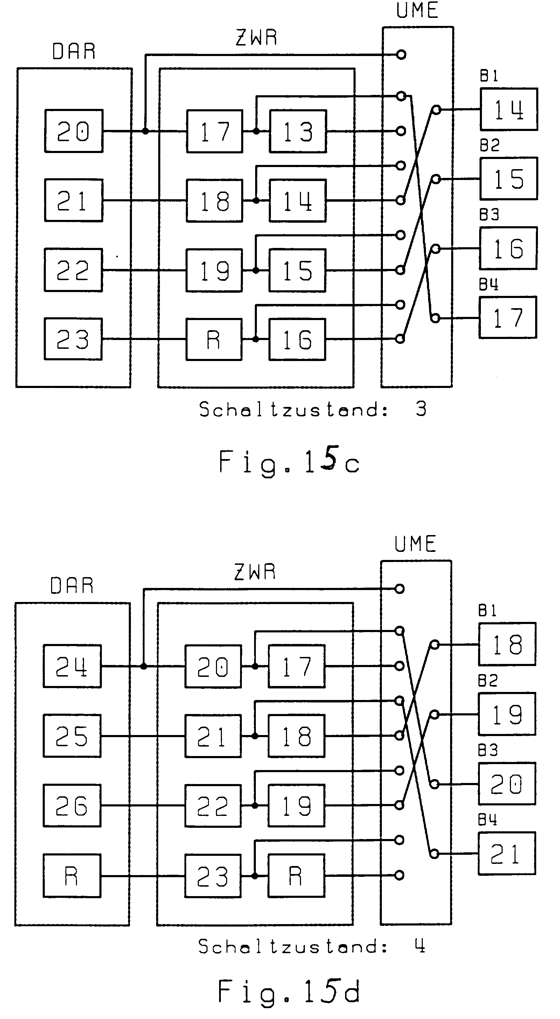

Im nächsten Taktzeitpunkt wird bewirkt, daß das aus den Bits 10 bis R bestehende Datenwort aus der zweiten Speicherbank in die dritte Speicherbank und das nächste, aus den Bits 13 bis 16 bestehende Datenwort in die zweite Speicherbank geschoben wird. Dazu wird der Umschalter UME wie dargestellt in den nächsten Schaltzustand geschaltet. Der so entstandene neue Zustand ist in Figur 15b dargestellt. Am Ausgang des Umschalters steht jetzt ein aus den Bits 10 bis 13 bestehendes Datenwort. Das gleiche geschieht im nächsten Taktzeitpunkt. Der sich so ergebende neue Zustand ist in der Figur 15c dargestellt.

Das setzt sich mit jedem Takt so fort, bis sich im Ausgangsregister des Schalters ein Zustand wie in Figur 16h einstellt.

Inzwischen sind wie in Figur 15b, 15d, 15f und 15h dargestellt, 4 Stopfbits R erschienen. Wie schon gesagt, werden die an den Ausgängen des Schalters erscheinenden Bits in einem elastischen Speicher eingeschrieben, an dessen Ausgang langsamer ausgelesen als am Eingang eingelesen wird.

Durch die im Eingangssignal mitübermittelten Stopfkriterien in System und Rahmen kann festgestellt weden, wann der o.a. Zeitpunkt erreicht wird.

Zu diesem Zeitpunkt, der dadurch gekennzeichnet ist, daß beim Auftauchen des oder der nächsten Stopfbits im kombinierten Speicher der Schalter nicht mehr so geschaltet werden kann, daß an seinem Ausgang ein vollständiges Folgewort erscheinen kann, wird die Übergabe des Wortes von dem Ausgang des Schalters an den elastischen Speicher für einen Takt unterbrochen.

Das ist bei den Figuren 15h, 15l und 15s der Fall, während bei den in den übrigen Figuren dargestellten Taktzeitpunkten die Wörter aus dem kombinierten Speicher über den geeignet eingestellten Schalter an den elastischen Speicher abgegeben werden.

Für das Auftreten von maximal 2 Stopfbits pro Datenwort gibt folgende Tabelle 6 eine Übersicht über die in den Figuren 15i bis 15t dargestellten möglichen Schaltzustände.

Tabelle 6:

| bisheriger Schaltzustand | Fig. | neuer Schaltzustand | Fig. | Einlesen des Datenwortes in den elastischen Speicher |
|---|---|---|---|---|
| 1 | 15i | 8 | 15j | ja |
| 8 | 15j | 5 | 15k | ja |
| 5 | 15k | 5 | 15l | nein |
| 5 | 15l | 1 | 15m | ja |
| 1 | 15m | 2 | 15n | ja |
| 2 | 15n | 3 | 15o | ja |
| 3 | 15o | 9 | 15p | ja |
| 9 | 15p | 7 | 15q | ja |
| 7 | 15q | 10 | 15r | ja |
| 10 | 15r | 10 | 15s | nein |
| 10 | 15s | 3 | 15t | ja |

Zusammengefaßt ergibt sich für das erfindungsgemäße Verfahren zum Ausfügen von Stopfbits nach Anspruch

1. Das gestopfte Eingangssignal wird mit einem Parallelisierungsfaktor m serien-parallel gewandelt, so daß sich Parallel-Worte mit m bit einschließlich der Stopfbits ergeben.

2. Diese Parallel-Worte werden in einen kombinierten Speicher geladen, der aus mehreren nacheinandergeschalteten Speicherbänken mit je m Speicherzellen besteht, wobei jeder Ausgang der vorgeschalteten Speicherzelle mit einem entsprechenden Eingang einer nachgeschalteten Speicherzelle verbunden ist, wobei dieser kombinierte Speicher mindestens

$$2(m-1)+p \text{ Speicherzellen aufweist.}$$

3. Der letzten Speicherbank ist ein Umschalter nachgeschaltet, der mindestens $2(m-1)+p$ Eingänge und m Ausgänge aufweist, so daß sich mindestens

$$(p+1)\cdot m-p \text{ Durchschaltungsmöglichkeiten ergeben.}$$

4. Dieser Umschalter wird so geschaltet, daß an seinen m Ausgängen nach jedem Umschaltzeitpunkt ein vollständiges Parallelwort erscheint, das in einen elastischen Speicher eingelesen wird (in einem elastischen Speicher wird schneller ein- als ausgelesen oder umgekehrt).

5. Das Einlesen in den elastischen Speicher wird unterbrochen, wenn an den Ausgängen des Schalters ein Wort mit einem oder mehreren Stopfbits steht. Die Zahl der Unterbrechungen läßt sich allgemein durch den Ausdruck

$$\sum_{n=0}^{n=p-1} (p - n)$$

beschreiben.

Bei den hier geschilderten Ausführungsbeispielen sind des besseren Verständnisses wegen folgende Bedingungen eingeführt.

a) Die Stopfbits stehen an bestimmten Stellen im parallelen Datenwort. Diese Ordnung herzustellen, die an den Ausgängen des Serien/Parallel-Wandlers noch nicht bestehen muß (das Stopfbit kann an beliebigen Ausgängen PE1 ... PE4 (Fig. 14) auftreten), ist in den Ausführungsbeispielen Aufgabe des Datenausrichters DAR.

b) Das Stopfbit kann nur am Ausgang UE4 (UEm) auftreten, bei zwei Stopfbits an den Ausgängen UE4 und UE3. (Allgemein: $UE_m$, $UE_{m-1}$,..., $UE_{m-p+1}$; es gilt m>p und p≥1)

c) Der Abstand der aufeinanderfolgenden gestopften parallelen Datenwörter beträgt, im Falle eines Stopfbits mindestens eine Taktzeit, im Falle von zwei Stopfbits, mindestens zwei Taktzeiten.

d) Im parallelen Datenstrom können Datenwörter auftreten, die sowohl ein als auch zwei Stopfbits enthalten.

Wird von den oben genannten Punkten a) ... d) abgewichen, z.B. wenn die Stopfbits verteilt im parallelen Datenwort stehen und/oder es ist nur eine bestimmte Anzahl von Stopfbits zu berücksichtigen und/oder die Anzahl der Stopfbits ist größer als zwei und/oder die Stopfbits können auch in nacheinanderfolgenden parallelen Datenwörtern auftreten, ist eine andere Steuerung STGE, sowie ein anders gestalteter Umschalter UME vorzusehen. Dies ist jedoch für das Verfahren, nach der Erfindung allgemein gesehen ohne Bedeutung.

Die Erfindung erlaubt die Verarbeitung von Digitalsignalen mit einer so hohen Bitrate, für deren Verarbeitung in herkömmlicher Weise kein Schaltkreissystem mit den erforderlichen kurzen Schaltzeiten zur Verfügung steht. Man wählt den Parallelisierungsfaktor m so groß, daß sich für den elastischen Speicher eine genügend geringe Bitrate ergibt, zu deren Verarbeitung ein Schaltkreissystem zur Verfügung steht.

Die Erfindung ist auch dann vorteilhaft, wenn zur Verarbeitung in herkömmlicher Weise ein Schaltkreissystem mit den erforderlichen kurzen Schaltzeiten zur Verfügung steht. Ein solches Schaltkreissystem weist einen hohen Energieverbrauch auf, was zu Schwierigkeiten bei der Abfuhr der Verlustleistung führt. Wie diese Schwierigkeiten durch die Erfindung vermieden werden, wird durch ein Rechenbeispiel erläutert. Es wird angenommen, daß das anzupassende Digitalsignal eine Bitrate von 152 Mbit/s aufweist. Bei einer Verarbeitung in herkömmlicher Weise muß ein Schaltkreissystem in ECL-Technik verwendet werden, weil dieses die erforderlichen kurzen Schaltzeiten aufweist. Allerdings weist es auch eine verhältnismäßig hohe Leistungsaufnahme von etwa 5 mW je D-Flip-flop auf. Für den elastischen Speicher ergäbe sich eine Leistungsaufnahme von etwa 500 mW.

Wählt man bei Anwendung der Erfindung den Parallelisierungsfaktor m = 8, so müssen im elastischen Speicher und in den nachfolgenden Baugruppen nur noch Digitalsignale mit einer Bitrate von 19 Mbit/s verarbeitet weden. Es kann also ein Schaltkreissystem mit langen Schaltzeiten verwendet werden. Solche Schaltkreissysteme zeichnen sich durch geringe Leistungsaufnahme aus. Hier käme die HCMOS-Technik in Frage mit einer Leistungsaufnahme von 216 μW je D-Flip-Flop (bei 10 % Schalthäufigkeit). Für den elastischen Speicher ergibt sich somit eine Leistungsaufnahme von 20 mW. Selbst unter Berücksichtigung der Leistungsaufnahme der zusätzlich erforderlichen Baugruppen (Serien-Parallel-Wandler, Zusatzspeicher, Umschalter, Parallel-Serien-Wandler, Frequenzteiler) bleibt man weit unter der Leistungsaufnahme von 500 mW für eine herkömmliche Anordung in ECL-Technik. Man muß also den Parallelisierungsfaktor m so wählen, daß sich eine genügend geringe Bitrate der zu verarbeitenden Digitalsignale ergibt, so daß ein Schaltkreissystem mit langen Schaltzeiten und entsprechend geringer Leistungsaufnahme verwendet werden kann.

**Patentansprüche**

1. Verfahren zur Taktanpassung für eine serielle Bitfolge von Informationsbits hoher Bitrate mit folgenden Merkmalen:

a) die seriell vorliegende, zu stopfende Bitfolge von Informationsbits wird in einem Serien-Parallel-Wandler mit dem Parallelisierungsfaktor m in m parallele Bitfolgen (P1, P2, P3, P4) niedrigerer Bitrate umgewandelt, die laufend in einem elastischen Speicher (ESPS) mit m Eingängen (P1,...,P4) und m Ausgängen (SP1,..., SP4) gespeichert werden;
b) außer bei denjenigen Impulsen des Lesetaktes, bei denen eine unten angegebene Ausnahmesituation gegeben ist, werden aus den auslesbaren Speicherzellen (ESP1, ESP2, ESP3, ESP4) des elastischen Speichers (ESPS) in den Impulsen des Lesetaktes jeweils m Informationsbits (SP1, SP2, SP3, SP4) ausgelesen und zum Teil in einem Zusatzspeicher (ZSPS) mit m Ausgängen und zum anderen Teil in eine Ausgabeeinrichtung (UMS, PSWS) übertragen;

gekennzeichnet durch folgende Merkmale:

c) in einem Impuls des Lesetaktes werden mit Hilfe der Ausgabeeinrichtung (UMS, PSWS) aus wenigstens einen der beiden Speicher (ESPS, ZSP) jeweils so viele Informationsbits parallel ausgelesen und gegebenenfalls ein oder mehrere Stopfbits hinzugefügt, daß die Gesamtzahl dieser Bits jeweils gleich m ist; nach Parallel-Serienwandlung in der Ausgabeeinrichtung werden diese Bits in der Reihenfolge ausgegeben, die - abgesehen von dem/den eingelagerten Stopfbit/s - der Reihenfolge der Informationsbits in der zu stopfenden Bitfolge entspricht;

d) in der Ausnahmesituation werden die auslesbaren Speicherzellen (ESP2, ESP2, ESP3, ESP4) des elastischen Speichers (ESPS) für wenigstens einen Impuls des Lesetaktes nicht mit Informationsbits nachgeladen; die Ausnahmesituation tritt jeweils spätestens dann auf, wenn der Zusatzspeicher (ZSPS) bei der nächsten Übertragung von Informationsbits überladen würde, und sie tritt jeweils frühestens dann auf, wenn sich mindestens m-p noch nicht ausgelesene Informationsbits im elastischen Speicher (ESPS) befinden, wobei p die Anzahl der im betreffenden Impuls des Lesetaktes einzufügenden Stopfbits ist.

2. Verfahren zur Taktanpassung für eine serielle Bitfolge von Informationsbits hoher Bitrate mit folgenden Merkmalen:

a) die seriell vorliegende, gestopfte Bitfolge von Informations- und Stopfbits wird in einem Serien-Parallel-Wandler mit dem Parallelisierungsfaktor m in m parallele Bitfolgen (PE1, PE2, PE3, PE4) niedrigerer Bitrate gewandelt, die laufend in einer kombinierten Speicherschaltung aus mehreren nacheinandergeschalteten Speicherbänken mit je m Speicherzellen gespeichert werden;

b) außer bei denjenigen Impulsen des Schreibtaktes, bei denen eine unten angegebene Ausnahmesituation gegeben ist, werden aus den auslesbaren Speicherzellen der kombinierten Speicherschaltung in Verbindung mit dem Umschalter in den Impulsen des Schreibtaktes jeweils m Informationsbits (BE1, BE2, BE3, BE4) ausgelesen und in einen elastischen Speicher (ESPE) übertragen;

gekennzeichnet durch folgende Merkmale:

c) in einem Impuls des Schreibtaktes werden mit Hilfe der Ausgabeeinrichtung (UME, ESPE, PSWE) aus wenigstens einem der Speicherbänke des kombinierten Speichers jeweils so viele Informationsbits parallel ausgelesen, daß die Gesamtzahl dieser Bits jeweils gleich m ist; nach Parallel-Serien-Wandlung in der Ausgabeeinrichtung werden diese Bits in der Reihenfolge ausgegeben, die der Reihenfolge der Informationsbits in der gestopften Bitfolge entspricht;

d) in der Ausnahmesituation werden die Eingangs-Speicherzellen des elastischen Speichers (ESPE) für wenigstens einen Impuls des Schreibtaktes nicht mit Informationsbits nachgeladen; die Ausnahmesituation tritt dann auf, wenn die kombinierte Zusatzspeicherschaltung (ZWR) bei der nächsten Übertragung von Informationsbits über den Umschalter (UME) in den elastischen Speicher (ESPE) leergelesen wurde, oder anders gesagt, sie tritt dann auf, wenn sich mindestens m-p noch nicht ausgelesene Informationsbits in den auslesbaren Speicherzellen der kombinierten elastischen Speicherschaltung (ZWR) befinden, wobei p die Anzahl der im betreffenden Impuls des Schreibtaktes auszufügenden Stopfbits ist.

3. Verfahren nach Anspruch 1, dadurch gekennzeichnet, daß das Hinzufügen von Stopfbits dadurch bewirkt wird, daß auch ein Informationsbit aus dem elastischen Speicher, das in die Ausgabeeinrichtung übertragen wird, in den Zusatzspeicher übertragen wird und von dort nochmals als Stopfbit ausgelesen wird.

4. Verfahren nach Anspruch 3, dadurch gekennzeichnet, daß das nochmals als Stopfbit ausgelesene Informationsbit nach einer vorgegebenen Vorschrift durch ein Bit überschrieben wird, das von einer Empfangseinrichtung als Stopfbit erkennbar ist.

5. Verfahren nach Anspruch 1 zum Einfügen von Stopfbits in eine Eingangsbitfolge von Informationsbits hoher Bitrate, gekennzeichnet durch folgende Verfahrensschritte:

a) die zu stopfende serielle Eingangsbitfolge wird in einem Serien-Parallel-Wandler mit dem Parallelisierungsfaktor m in m parallele Bitfolgen niedrigerer Bitrate (SPWS) gewandelt;

b) jeweils m parallele Bits der Bitfolgen niedrigerer Bitrate werden in einem elastischen Speicher (ESPS) mit m Eingängen (P1,...,P4) und m Ausgängen (SP1,...,SP4) mit der durch m geteilten Taktfrequenz der Eingangsbitfolge eingeschrieben;

c) der Inhalt der auslesbaren Speicherzellen des elastischen Speichers (SP1-SP4) wird mit der durch m geteilten Taktfrequenz einer Ausgangsbitfolge ausgelesen, wobei das Auslesen in Abständen kurzzeitig unterbrochen wird;

d) die ausgelesenen Bits werden parallel-seriengewandelt (PSWS);

e) zum Einfügen von mindestens einem Stopfbit werden die Informationsbits für die entsprechenden auslesbaren Speicherzellen des elastischen Speichers (ESPS) verdrängt und anstelle dieser die Stopfbits eingebracht. Die verdrängten parallelen Informationsbits werden in einen Zusatzspeicher (ZSPS) eingeschrieben;

f) die m auslesbaren Speicherzellen des elastischen Speichers (ESPS) werden ausgelesen;

g) die m auslesbaren Speicherzellen des elastischen Speichers (ESPS) werden mit der nächsten parallelen Bitfolge geladen und der Zusatzspeicher (ZSPS) wird zusammen mit soviel der auslesbaren Speicherzellen des elastischen Speichers (ESPS) so ausgelesen, daß die Gesamtzahl der ausgelesenen Bits gleich m ist und die Reihenfolge der Bits nach der Parallel-Serien-Wandlung (PSWS) die gleiche wie bei der Eingangsbitfolge ist;

h) die aus den auslesbaren Speicherzellen des elastischen Speichers (ESPS) nicht ausgelesenen Informationsbits werden in den Zusatzspeicher (ZSPS) übertragen und die auslesbaren Speicherzellen des elastischen Speichers (ESPS) mit der nächsten parallelen Bitfolge geladen;

i) spätestens wenn im elastischen Speicher (ESPS) eine Folge noch nicht ausgelesener Bits steht und wenn durch weiteres Einfügen von Stopfbits und Laden des Zusatzspeichers (ZSPS) mit verdrängten Bits (Verfahrensschritt e) die Zahl der verdrängten Bits größer würde als die Zahl der Speicherzellen des Zusatzspeichers (ZSPS), wird das Auslesen von Informationsbits aus den auslesbaren Speicherzellen des elastischen Speichers (ESPS) für einen Impuls des Lesetaktes unterbochen und dafür die im Zusatzspeicher (ZSPS) befindlichen und bevorzugt noch nicht ausgelesenen Informationsbits so ausgelesen (Verfahrensschritt g), daß die Gesamtzahl der ausgelesenen Bits gleich m und die Reihenfolge der Bits nach der Parallel-Serien-Wandlung die gleiche wie bei der Eingangsbitfolge ist;

k) danach werden die in den auslesbaren Speicherzellen des elastischen Speichers (ESPS) befindlichen Bits ausgelesen (Verfahrensschritt c).

6. Schaltungsanordnung zur Taktanpassung in der digitalen Nachrichtentechnik mit folgenden Merkmalen:

a) es ist ein elastischer Speicher (ESPS, Figur 1) vorgesehen, welcher als First-In-First-Out-Memory ausgebildet ist;

b) der elastische Speicher (ESPS) ist zur parallelen Speicherung einer Anzahl von Digitalsignalen ausgebildet und weist eine gleiche Anzahl Eingänge (P1,...,P4) sowie eine gleiche Anzahl Ausgänge (SP1,...,SP4) auf, wobei die jeweilige Anzahl gleich einem Parallelisierungsfaktor (m) ist;

c) dem elastischen Speicher ist ein Serien-Parallel-Wandler (SPWS) vorgeschaltet mit einem Eingang (DES) für das anzupassende Digitalsignal, der Serien-Parallel-Wandler (SPWS) wandelt das anzupassende Digitalsignal in mehrere parallele Digitalsignale (P1,...,P4) um, wobei die Anzahl der parallelen Digitalsignale gleich dem Parallelisierungsfaktor (m) ist;

d) dem elastischen Speicher ist ein Zusatzspeicher (ZSPS) nachgeschaltet, der eine Anzahl Speicherzellen (ZSP1,...,ZSP4, Figur 3) aufweist, wobei diese Anzahl gleich dem Parallelisierungsfaktor (m) ist;

e) dem elastischen Speicher (ESPS) und dem Zusatzspeicher (ZSPS) ist ein Umschalter (UMS) nachgeschaltet, der eine Anzahl Ausgänge (B1,...,B4) aufweist, wobei diese Anzahl gleich dem Parallelisierungsfaktor (m) ist;

f) dem Umschalter (UMS) ist ein Parallel-Serien-Wandler (PSWS, Figur 1) nachgeschaltet, welcher einen Ausgang (MS) für das angepaßte Digitalsignal aufweist;

g) es ist eine Steuerung vorgesehen;

gekennzeichnet durch folgende Merkmale:

h) der Umschalter (UMS) ist so ausgebildet, daß er von einer Anzahl unterschiedlicher Schaltzustände jeweils einen annehmen kann und die Anzahl ist gleich dem Parallelisierungsfaktor (m);

i) die Steuerung (STGS) ist zur Ausführung folgender Funktionen ausgebildet: aus einem Takt einer übergeordneten Einrichtung (TH) und einem Stopfkriterium (STO) werden Steuersignale (D1,...,D4) zur Einstellung eines Schaltzustandes im Umschalter(UMS) sowie ein Lesetakt (LT) nach folgender Gesetzmäßigkeit gewonnen:

i1) nimmt das Stopfkriterium (STO) logisches ja-Signal an, wird von einem Schaltzustand zum nächsten Schaltzustand gewechselt, wobei nach Erreichen eines Endzustandes von diesem in einen Anfangszustand und von diesem in den nächsten Schaltzustand gewechselt wird usw.;

i2) die Taktfrequenz des Lesetaktes (LT) ist gleich der Taktfrequenz des angepaßten Digitalsignals (MS) geteilt durch einen Wert, der gleich den Parallelisierungsfaktor (m) ist;

j) der Lesetakt (LT) wird dem elastischen Speicher (ESPS) und dem Zusatzspeicher (ZSPS) zugeführt, ein Taktimpuls bewirkt folgendes, wenn kein Wechsel vom Endzustand in den Anfangszustand eintritt: ein an den Ausgängen (SP1 ... SP4) des elastischen Speichers (ESPS) anliegendes Datenwort wird in die Speicherzellen (ZSP1 ... ZSP4, Figur 3) des Zusatzspeichers (ZSPS) eingespeichert, anschließend erscheint an den Ausgängen des elastischen Speichers das nächste Datenwort;

k) der Umschalter (UMS) ist in einer solchen Weise ausgebildet und mit dem elastischen Speicher (ESPS) sowie dem Zusatzspeicher (ZSPS) verbunden, daß folgende Funktionen ausgeführt werden:

k 1) zwischen den Ausgängen (SP1 ... SP4) des elastischen Speichers (ESPS) und den Ausgängen (B1 ... B4) des Umschalters besteht eine Anzahl Verbindungen, wobei diese Anzahl gleich dem Parallelisierungsfaktor (m) ist;

k 2) jede Verbindung verbindet einen bestimmten Ausgang des elastischen Speichers mit einem bestimmten Ausgang des Umschalters;

k 3) im Anfangszustand des Umschalters (UM) läuft nur eine Verbindung über eine Speicherzelle des Zusatzspeichers (Figur 5a);

k 4) im jeweils nächsten Schaltzustand läuft eine weitere Verbindung über eine Speicherzelle des Zusatzspeichers (Figur 5b ... 5d);

k 5) läuft nur eine Verbindung über eine Speicherzelle des Zusatzspeichers, so ist es diejenige zum letzten Ausgang (SP4) des elastischen Speichers;

k 6) laufen zwei Verbindungen über Speicherzellen des Zusatzspeichers, so sind es diejenigen zum letzten und vorletzten Ausgang (SP4, SP3) des elastischen Speichers, usw.;

k 7) dem ersten Ausgang (SP1) des elastischen Speichers ist die erste Speicherzelle (ZSP1) des Zusatzspeichers zugeordnet, dem zweiten Ausgang (SP2) die zweite Speicherzelle (ZSP2) usw.;

k 8) die nicht über Speicherzellen des Zusatzspeichers laufenden Verbindungen enden auf den letzten Ausgängen (B4, B3, ...) des Umschalters;

k 9) die über Speicherzellen des Zusatzspeichers laufenden Verbindungen enden auf den ersten Ausgängen (B1, B2, ...) des Umschalters;

K10) innerhalb der unmittelbar geführten Verbindungen ist die Reihenfolge in der Zuordnung der Ausgänge (SP1, SP2 usw.) des elastischen Speichers zu den Ausgängen (...B3, B4) des Umschalters gleichsinnig;

K11) innerhalb der über Speicherzellen des Zusatzspeichers laufenden Verbindungen ist die Reihenfolge in der Zuordnung der Ausgänge (...,SP3, SP4) des elastischen Speichers zu den Ausgängen (B1, B2, ...) des Umschalters gleichsinnig.

7.  Schaltungsanordnung zur Taktanpassung in der digitalen Nachrichtentechnik nach Anspruch 6, gekennzeichnet durch folgendes Merkmal:
    die Steuerung (STG) ist so ausgebildet, daß beim Wechsel vom Endzustand in den Anfangszustand im Lesetakt (LT) ein Taktimpuls ausgeblendet wird.

8.  Schaltungsanordnung zur Taktanpassung in der digitalen Nachrichtentechnik nach Anspruch 6, gekennzeichnet durch folgende Merkmale:

    a) die Steuerung ist so ausgebildet, daß zusätzlich folgende Funktionen möglich sind:

    a1) es kann von einem Schaltzustand unmittelbar in den übernächsten oder in einem noch weiteren Schaltzustand gewechselt werden;
    a2) schließt ein Wechsel nach Merkmal a1) einen Wechsel vom Endzustand in den Anfangszustand ein, bleiben das an den Ausgängen (SP1...SP4) des elastischen Speichers (ESPS) anliegende Datenwort und der Inhalt des Zusatzspeichers (ZSPS) erhalten.

9. Schaltungsanordnung zur Taktanpassung in der digitalen Nachrichtentechnik nach Anspruch 8 gekennzeichnet durch folgendes Merkmal:
die Steuerung (STGS', Figur 9) ist so ausgebildet, daß ein Taktimpuls des Lesetaktes (LT, Figur 10) ausgeblendet wird wenn ein Wechsel nach dem Merkmal a1) des Anspruchs 10 einen Wechsel vom Endzustand in den Anfangszustand einschließt.

**Claims**

1. Method for clock adaptation for a serial bit sequence of information bits with a high bit rate having the following features:

a) the bit sequence, which is present in serial form and is to be stuffed, of information bits is converted into m parallel bit sequences (P1, P2, P3, P4) with a lower bit rate in a serial-to-parallel converter with the parallelization factor m, which bit sequences (P1, P2, P3, P4) are continuously stored in an elastic memory (ESPS) with m inputs (P1, ... P4) and m outputs (SP1, ... SP4);
b) apart from at those pulses of the read clock at which an exceptional situation, indicated below, is given, in each case m information bits (SP1, SP2, SP3, SP4) are read out of the memory cells (ESP1, ESP2, ESP3, ESP4), which can be read out, of the elastic memory (ESPS), in the pulses of the read clock and some of them are transmitted into an additional memory (ZSPS) with m outputs and the rest of them are transmitted into an output device (UMS, PSWS); characterized by the following features:
c) in each case so many information bits are read out in parallel from at least one of the two memories (ESPS, ZSP), and if appropriate one or more stuffing bits added, in one pulse of the read clock with the aid of the output device (UMS, PSWS), that the sum of these bits is equal to m in each case; after parallel-series conversion in the output device these bits are output in the sequence which - apart from the interposed stuffing bit or bits - corresponds to the sequence of information bits in the bit sequence to be stuffed;
d) in the exceptional situation, the memory cells (ESP1, ESP2, ESP3, ESP4), which can be read out, of the elastic memory (ESPS) are not reloaded with information bits for at least one pulse of the read clock; the exceptional situation respectively occurs at the latest when the additional memory (ZSPS) has been overloaded during the subsequent transmission of information bits, and it respectively occurs at the earliest when at least m-p information bits which have not yet been read out are located in the elastic memory (ESPS), p being the number of stuffing bits to be inserted in the respective pulse of the read clock.

2. Method for clock adaptation for a serial bit sequence of information bits with a high bit rate having the following features:

a) the stuffed bit sequence, which is present in serial form, of information bits and stuffing bits is converted into m parallel bit sequences (PE1, PE2, PE3, PE4) with a lower bit rate in a serial-to-parallel converter with the parallelization factor m, which bit sequences (PE1, PE2, PE3, PE4) are continuously stored in a combined memory circuit comprising a plurality of memory banks which are connected in series, each having m memory cells;
b) apart from at those pulses of the write clock at which an exceptional situation, indicated below, is given, in each case m information bits (BE1, BE2, BE3, BE4) are read out from the memory cells, which can be read out, of the combined memory circuit in conjunction with the change-over switch at the pulses of the write clock and are transmitted into an elastic memory (ESPE);

characterized by the following features:

c) in each case so many information bits are read out in parallel from at least one of the memory banks of the combined memory at one pulse of the write clock with the aid of the output device (UME, ESPE, PSWE) that the sum of these bits is equal to m in each case; after parallel-to-serial conversion in the output device these bits are output in the sequence which corresponds to the sequence of the information bits in the stuffed bit sequence;
d) in the exceptional situation the input memory cells of the elastic memory (ESPE) are not reloaded with information bits for at least one pulse of the write clock; the exceptional situation occurs if the combined additional memory circuit (ZWR) has been emptied into the elastic memory (ESPE) during the subsequent transmission of information bits via the change-over switch (UME) or, in other words, it occurs if at least m-p information bits which have not yet been read out are located in the memory cells, which can be read out, of the combined elastic memory circuit (ZWR), p being the number of stuffing bits to be extracted in the respective pulse of the write clock.

3. Method according to Claim 1, characterized in that the addition of stuffing bits is brought about in that an information bit from the elastic memory which is transmitted into the output device is also transmitted into the additional memory and is read out from there once more as a stuffing bit.

4. Method according to Claim 3, characterized in that the information bit which has been read out once more as a stuffing bit is overwritten according to a prescribed rule by one bit which can be detected as a stuffing bit by a receiving device.

5. Method according to Claim 1 for inserting stuffing bits into an input bit sequence of information bits with a high bit rate, characterized by the following method steps:

   a) the serial input bit sequence to be stuffed is converted into m parallel bit sequences with a lower bit rate (SPWS) in a serial-to-parallel converter with the parallelization factor m;

   b) in each case m parallel bits of the bit sequences with a lower bit rate are written into an elastic memory (ESPS) with m inputs (P1,...,P4) and m outputs (SP1,...,SP4) with the clock frequency, divided by m, of the input bit sequence;

   c) the contents of the memory cells, which can be read out, of the elastic memory (SP1-SP4) are read out with the clock frequency, divided by m, of an output bit sequence, the reading out being interrupted briefly at intervals;

   d) the read-out bits are parallel-to-serial converted (PSWS);

   e) in order to insert at least one stuffing bit, the information bits for the corresponding memory cells, which can be read out, of the elastic memory (ESPS) are expelled and the stuffing bits are introduced in their place. The expelled parallel information bits are written into an additional memory (ZSPS);

   f) the m memory cells, which can be read out, of the elastic memory (ESPS) are read out;

   g) the m memory cells, which can be read out, of the elastic memory (ESPS) are loaded with the next parallel bit sequence and the additional memory (ZSPS) is read out, together with such a number of the memory cells, which can be read out, of the elastic memory (ESPS) in such a way that the sum of the read-out bits is equal to m and the sequence of the bits after the parallel-to-serial conversion (PSWS) is the same as in the input bit sequence;

   h) the information bits which have not been read out of the memory cells, which can be read out, of the elastic memory (ESPS) are transmitted into the additional memory (ZSPS) and the memory cells, which can be read out, of the elastic memory (ESPS) are loaded with the next parallel bit sequence;

   i) at the latest when a sequence of bits which have not yet been read out is present in the elastic memory (ESPS) and when, as a result of further insertion of stuffing bits and loading of the additional memory (ZSPS) with expelled bits (method step e), the number of expelled bits would be higher than the number of memory cells of the additional memory (ZSPS), the reading out of information bits out of the memory cells, which can be read out, of the elastic memory (ESPS) is interrupted for one pulse of the read clock and for this the information bits which are located in the additional memory (ZSPS) and have preferably not yet been read out are read out in such a way (method step g) that the sum of the read-out bits is equal to m and the sequence of the bits after the parallel-to-serial conversion is the same as in the input bit sequence;

   k) subsequently, the bits located in the memory cells, which can be read out, of the elastic memory (ESPS) are read out (method step c).

6. Circuit arrangement for clock adaptation using digital telecommunications technology having the following features:

   a) an elastic memory (ESPS, Figure 1) which is designed as a first-in-first-out memory is provided;
   b) the elastic memory (ESPS) is designed for the parallel storage of a number of digital signals and has an equal number of inputs (P1,...P4) and an equal number of outputs (SP1,...,SP4), the respective number being equal to a parallelization factor (m);

c) a serial-to-parallel converter (SPWS) is connected upstream of the elastic memory, with an input (DES) for the digital signal to be adapted, which serial-to-parallel converter (SPWS) converts the digital signal to be adapted into a plurality of parallel digital signals (P1,...,P4), the number of parallel digital signals being equal to the parallelization factor (m);

d) an additional memory (ZSPS) which has a number of memory cells (ZSP1,...ZSP4, Figure 3) is connected downstream of the elastic memory, this number being equal to the parallelization factor (m);

e) a change-over switch (UMS) which has a number of outputs (B1,...,B4) is connected downstream of the elastic memory (ESPS) and the additional memory (ZSPS), this number being equal to the parallelization factor (m);

f) a parallel-to-serial converter (PSWS, Figure 1) which has an output (MS) for the adapted digital signal is connected downstream of the change-over switch (UMS);

g) a control is provided;

characterized by the following features:

h) the change-over switch (UMS) is constructed in such a way that it can in each case assume one switching state of a number of different switching states and the number is equal to the parallelization factor (m);

i) the control (STGS) is designed to execute the following functions: control signals (D1,...D4) for setting a switching state in the change-over switch (UMS) and a read clock (LT) are acquired from a clock of a superordinate device (TH) and a stuffing criterion (STO) according to the following rule:

i1) if the stuffing criterion (STO) assumes the logic yes signal, the system changes from one switching state to the next switching state, in which case after a final state is reached the system changes from this final state into an initial state and from this initial state into the next switching state etc.:

i2) the clock frequency of the read clock (LT) is equal to the clock frequency of the adapted digital signal (MS) divided by a value which is equal to the parallelization factor (m);

j) the read clock (LT) is fed to the elastic memory (ESPS) and the additional memory (ZSPS) and a clock pulse brings about the following if no change from the final state into the initial state occurs: a data word which is present at the outputs (SP1 ... SP4) of the elastic memory (ESPS) is stored in the memory cells (ZSP1 ... ZSP4), Figure 3) of the additional memory (ZSPS) and the next data word subsequently appears at the outputs of the elastic memory;

k) the change-over switch (UMS) is designed and connected to the elastic memory (ESPS) and the additional memory (ZSPS) in such a way that the following functions are executed:

k 1) there is a number of connections between the outputs (SP1 ... SP4) of the elastic memory (ESPS) and the outputs (B1 ... B4) of the change-over switch, this number being equal to the parallelization factor (m);

k 2) each connection connects a specific output of the elastic memory to a specific output of the change-over switch;

k 3) in the initial state of the change-over switch (UM) only one connection runs via a memory cell of the additional memory (Figure 5a);

k 4) in the respective next switching state a further connection runs via a memory cell of the additional memory (Figure 5b .. 5d);

k 5) if only one connection runs via a memory cell of the additional memory, it is that connection to the last output (SP4) of the elastic memory;

k 6) if two connections run via memory cells of the additional memory, they are those to the last output and penultimate output (SP4, SP3) of the elastic memory, etc.:

k 7) the first memory cell (ZSP1) of the additional memory is assigned to the first output (SP1) of the elastic memory, the second memory cell (ZSP2) is assigned to the second output (SP2) etc.;

k 8) the connections which do not run via memory cells of the additional memory end at the last outputs (B4, B3, ...) of the change-over switch;

k 9) the connections which run via memory cells of the additional memory end at the first outputs (B1, B2, ...) of the change-over switch;

K10) within the directly routed connections the sequence in the assignment of the outputs (SP1, SP2 etc.) of the elastic memory is in the same direction as for the outputs (...B3, B4) of the change-over switch;

K11) within the connections which run via memory cells of the additional memory, the sequence in the assignment of the outputs (...,SP3, SP4) of the elastic memory is in the same direction as for the outputs (B1, B2,...) of the change-over switch.

7. Circuit arrangement for clock adaptation using digital telecommunications technology according to Claim 6, characterized by the following feature:
the control (STG) is designed such that at the change from the final state to the initial state a clock pulse in the read clock (LT) is gated out.

8. Circuit arrangement for clock adaptation using digital telecommunications technology according to Claim 6, characterized by the following features:

a) the control is designed such that the following functions are additionally possible:

a1) it is possible to change directly from one switching state to the next but one or into yet another switching state;
a2) if a change according to feature a1) includes a change from the final state into the initial state, the data word present at the outputs (SP1...SP4) of the elastic memory (ESPS) and the contents of the additional memory (ZSPS) are retained.

9. Circuit arrangement for clock adaptation using digital telecommunications technology according to Claim 8, characterized by the following feature:
the control (STGS', Figure 9) is designed in such a way that a clock pulse of the read clock (LT, Figure 10) is gated out when a change according to the feature a1) of Claim 10 includes a change from the final state into the initial state.

**Revendications**

1. Procédé d'adaptation de la cadence d'une suite de bits-série, de bits d'informations à vitesse de bits élevée, comprenant les caractéristiques suivantes :

a) la suite de bits d'informations de bourrage, arrivant en série est convertie dans un convertisseur-série/parallèle selon un coefficient de mise en parallèle m en m suites de bits parallèles (P1, P2, P3, P4) à vitesse de bits plus faible, qui sont enregistrées en continu dans une mémoire élastique (ESPS) à m entrées (P1 ... P4) et m sorties (SP1 ... SP4) ;
b) de plus pour les impulsions de la cadence de lecture pour lesquelles on rencontre une situation exceptionnelle définie ci-après, on lit dans les cellules de mémoire (ESP1, ESP2, ESP3, ESP4) autorisées à la lecture de la mémoire élastique (ESPS), au cours des impulsions de la cadence de lecture, chaque fois m bits d'informations (SP1, SP2, SP3, SP4) et on les transmet d'une part à une mémoire supplémentaire (ZSPS) ayant m sorties et d'autre part à une installation d'émission (UMS, PSWS) ;

procédé caractérisé en ce que :

c) au cours d'une impulsion de la cadence de lecture, à l'aide de l'installation d'émission (UMS, PSWS), dans au moins l'une des deux mémoires (ESPS, ZSP) on lit chaque fois autant de bits d'informations en parallèle et le cas échéant on introduit un ou plusieurs bits de bourrage de façon que le nombre total des bits soit chaque fois égal à m, et après conversion parallèle-série dans l'installation d'émission, on émet ces bits dans une succession qui, abstraction faite du ou des bits de bourrage, correspond à la suite des bits d'informations dans la suite des bits de bourrage ;

d) dans la situation d'exception, les cellules de mémoire (ESP1, ESP2, ESP3, ESP4) susceptibles d'être lues de la mémoire élastique (ESPS) ne sont pas chargées au moins pour une impulsion de la cadence de lecture avec des bits d'informations ; la situation d'exception se produit toutefois ultérieurement si la mémoire supplémentaire (ZSPS) a été surchargée au cours de la transmission suivante des bits d'informations et elle se produit au plutôt si au moins m-p de bits d'informations non encore lus, se trouvent dans la mémoire élastique (ESPS), p étant le nombre de bits de bourrage à introduire dans les impulsions concernées de la cadence de lecture.

2. Procédé d'adaptation de la cadence pour une suite de bits-série de bits d'informations à vitesse de bit élevée et ayant les caractéristiques suivantes :

a) la suite de bits de bourrage, correspondant à des bits d'informations et à des bits de bourrage, présentés en série, est convertie dans un convertisseur série-parallèle avec un coefficient de mise en parallèle m en m en suites de bits parallèles (PE1, PE2, PE3, PE4) à vitesse de bit plus faible, et qui sont enregistrées en continu dans un circuit de mémoire combiné, composé de plusieurs bancs de mémoire successifs ayant chaque fois m cellules de mémoire ;
b) sauf pour celles des impulsions de la cadence d'écriture pour lesquelles il y a une situation d'exception définie ci-après, à partir des cellules de mémoire susceptibles d'être lues dans le circuit de mémoire combiné, en liaison avec le commutateur, on lit dans les impulsions de la cadence d'enregistrement, chaque fois m bits d'informations (BE1, BE2, BE3, BE4) et on les transfère dans une mémoire élastique (ESPE) ;

procédé caractérisé en ce que :

c) dans une impulsion de la cadence d'écriture, à l'aide de l'installation d'émission (UME, ESPE, PSWE), à partir d'au moins l'un des bancs de mémoire de la mémoire combinée, on lit en parallèle chaque fois le nombre de bits d'informations nécessaires pour que le nombre total des bits soit chaque fois égal à m ; après conversion parallèle-série dans l'installation d'émission, on émet ces bits dans une suite qui correspond à la suite des bits d'informations de la suite de bits de bourrage ;
d) dans la situation exceptionnelle, on ne charge pas les cellules de mémoire d'entrée de la mémoire élastique (ESPE) pour au moins une impulsion de la cadence d'écriture avec des bits d'informations ; la situation exceptionnelle se produit si le circuit de mémoire complémentaire, combiné (ZWR) a été vidé en lecture au cours de la transmission suivante de bits d'informations par le convertisseur (UME) dans la mémoire élastique (ESPE) ou en d'autres termes cette situation exceptionnelle se produit si au moins m-p bits d'informations qui n'ont pas encore été lus se trouvent dans les cellules de mémoire susceptibles d'être lues du circuit de mémoire élastique combiné (ZWK), p étant le nombre des bits de bourrage à ajouter pendant l'impulsion concernée de la cadence d'écriture.

3. Procédé selon la revendication 1, caractérisé en ce que pour l'introduction de bits de bourrage, on transmet également à la mémoire complémentaire un bit transmis de la mémoire élastique dans l'installation d'émission et de cette mémoire complémentaire, on lit de nouveau ce bit comme bit de bourrage.

4. Procédé selon la revendication 3, caractérisé en ce que, sur le bit d'information lu une nouvelle fois comme bit de bourrage, on inscrit un bit selon une prescription prédéterminée, ce bit étant reconnu par une installation de réception comme bit de bourrage.

5. Procédé selon la revendication 1 pour insérer des bits de bourrage dans une suite de bits d'entrée composée de bits d'informations à vitesse de bit élevée, caractérisé par les étapes de procédé suivantes :

a) la suite de bits d'entrée en série, de bourrage est convertie par un convertisseur série-parallèle selon un facteur de mise en parallèle m en m suites de bits parallèles à vitesse de bit plus faible (SPWS) ;
b) chaque fois m bits parallèles des suites de bits à vitesse de bit plus faible sont enregistrés dans une mémoire élastique (ESPS) ayant m entrées (P1 ... P4) et m sorties (SP1 ... SP4), selon une fréquence de cadence correspondant à celle de la suite des bits d'entrée divisée par m ;
c) le contenu des cellules de mémoire susceptibles d'être lues de la mémoire élastique (SP1-SP4) est lu par la fréquence d'horloge d'une suite de bits de sortie, divisée par m, la lecture étant interrompue brièvement selon des intervalles ;
d) les bits lus subissent une conversion parallèle-série (PSWS) ;
e) pour introduire au moins un bit de bourrage, on refoule les bits d'informations pour les cellules de mémoire susceptibles d'être lues, correspondantes, de la mémoire élastique (ESPS) et à la place de celles-ci on place les bits de bourrage. Les bits d'informations parallèles, refoulés étant enregistrés dans une mémoire supplémentaire (ZSPS) ;

f) on lit les m cellules de mémoire susceptibles d'être lues de la mémoire élastique (ESPS) ;

g) les m cellules de mémoire susceptibles d'être lues dans la mémoire élastique (ESPS) sont chargées avec la suite de bits parallèles suivante et la mémoire complémentaire (ZSPS) est lue avec un nombre de cellules de mémoire susceptibles d'être lues dans la mémoire élastique (ESPS) pour que le nombre total des bits lus soit égal à m et que la suite des bits après conversion parallèle-série (PSWS) soit la même que pour la suite des bits d'entrée ;

h) les bits d'informations non lus dans les cellules de mémoire susceptibles d'être lues dans la mémoire élastique (ESPS) sont transmis dans la mémoire supplémentaire (ZSPS) et les cellules de mémoire lues dans la mémoire élastique (ESPS) sont chargées avec la suite de bits parallèles suivante ;

i) au plus tard si dans la mémoire élastique (ESPS), une suite de bits non encore lus est disponible et que par l'introduction d'autres bits de bourrage et le chargement de la mémoire complémentaire (ZSPS) avec les bits refoulés (étape de procédé e), le nombre des bits refoulés dépasserait le nombre des cellules de mémoire de la mémoire complémentaire (ZSPS), on interrompt la lecture des bits d'informations dans les cellules de mémoire susceptibles d'être lues de la mémoire élastique (ESPS) pour une impulsion de la cadence de lecture et à la place on lit les bits d'informations de la mémoire complémentaire (ZSPS) et qui n'ont de préférence pas encore été lus (étape de procédé g) pour que le nombre total des bits lus soit égal à m et que la suite des bits après la conversion parallèle-série soit la même que pour la suite des bits d'entrée ;

k) puis, on lit les bits qui se trouvent dans les cellules de mémoire susceptibles d'être lues de la mémoire élastique (ESPS) (étape de procédé c).

**6.** Circuit pour adapter la cadence dans la technique des transmissions d'informations numériques et ayant les caractéristiques suivantes :

a) il comporte une mémoire élastique (ESPS, figure 1) réalisée sous la forme d'une mémoire FIFO (premier entré-premier sorti) ;

b) la mémoire élastique (ESPS) est réalisée pour enregistrer en parallèle un nombre de signaux numériques et elle comporte un nombre égal d'entrées (P1 ... P4) ainsi qu'un nombre égal de sorties (SP1 ... SP4), le nombre respectif étant égal à un coefficient de mise en parallèle (m) ;

c) la mémoire élastique est précédée d'un convertisseur série-parallèle (SPWS) avec une entrée (DES) pour le signal numérique à adapter, le convertisseur série-parallèle (SPWS) convertit le signal numérique à adapter en plusieurs signaux numériques parallèles (P1 ... P4), le nombre des signaux numériques parallèles étant égal au facteur de mise en parallèle (1) ;

d) la mémoire élastique est suivie d'une mémoire complémentaire (ZSPS) présentant un nombre de cellules de mémoire (ZSP1 ... ZSP4, figure 3) qui est égal au facteur de mise en parallèle (m) ;

e) la mémoire élastique (ESPS) et la mémoire complémentaire (ZSPS) sont suivies par un convertisseur (UMS) présentant un nombre de sorties (B1 ... B4) égal au facteur de mise en parallèle (m) ;

f) le convertisseur (UMS) est suivi d'un convertisseur parallèle-série (PSWS, figure 1) ayant une sortie (MS) pour le signal numérique adapté ;

g) une commande ;

installation caractérisée en ce que :

h) le convertisseur (UMS) est réalisé pour pouvoir prendre un état parmi un nombre d'états de commutation différents et ce nombre est égal au facteur de mise en parallèle (m) ;

i) la commande (STGS) est réalisée pour effectuer les fonctions suivantes : à partir d'une cadence d'une installation d'ordre supérieur (TH) et d'un critère de bourrage (STO), on forme des signaux de commande (D1 ... D4) pour régler un état de commutation dans le commutateur (UMS) ainsi qu'une cadence de lecture (LT) selon les règles suivantes :

i1) le critère de bourrage (STO) est à l'état logique oui, on passe d'un état de commutation à l'état de commutation suivant, et après avoir atteint un état final, on passe de celui-ci dans un état initial et de celui-ci dans l'état de commutation suivant et ainsi de suite ;

i2) la fréquence de la cadence de lecture (LT) est égale à la fréquence de la cadence du signal numérique adapté (MS) divisée par une valeur égale au facteur de mise en parallèle (m) ;

j) la cadence de lecture (LT) est appliquée à la mémoire élastique (ESPS) et à la mémoire complémentaire (ZSPS) et une impulsion de cadence entraîne que lorsqu'il n'y a pas d'alternance passant de l'état final à l'état initial : un mot de données appliqué aux sorties (SP1 ... SP4) de la mémoire élastique (ESPS) est enregistré dans les cellules de mémoire (ZSP1 ... ZP4, figure 3) de la mémoire complémentaire (ZSPS), puis le mot de données suivant apparaît sur les sorties de la mémoire élastique ;

k) le commutateur (UMS) est réalisé et lié à la mémoire élastique (ESPS) et à la mémoire complémentaire (ZSPS) pour effectuer les fonctions suivantes :

k 1) entre les sorties (SP1 ... SP4) de la mémoire élastique (ESPS) et les sorties (B1 ... B4) du commutateur, il y a un nombre de liaisons, ce nombre étant égal au coefficient de mise en parallèle (m) ;

K 2) chaque liaison relie une sortie déterminée de la mémoire élastique à une sortie déterminée du commutateur ;

k 3) à l'état initial du commutateur (UM), il n'y a qu'une liaison passant par une cellule de mémoire de la mémoire complémentaire (figure 5a) ;

k 4) dans chaque état de commutation suivant, respectif, une autre liaison passe par une cellule de mémoire de la mémoire complémentaire (figures 5b ... 5d) ;

k 5) lorsqu'une liaison seulement passe par une cellule de mémoire de la mémoire complémentaire, il s'agit de celle allant vers la dernière sortie (SP4) de la mémoire élastique ;

k 6) lorsque deux liaisons passent par les cellules de mémoire de la mémoire complémentaire, il s'agit de celle allant vers la dernière et l'avant-dernière sortie (SP4, SP3) de la mémoire élastique, et ainsi de suite ;

k 7) la première sortie (SP1) de la mémoire élastique est associée à la première cellule de mémoire (ZSP1) de la mémoire complémentaire, la seconde sortie (SP2) est associée à la seconde cellule de mémoire (ZSP2) et ainsi de suite ;

k 8) les liaisons qui ne passent pas par les cellules de mémoire de la mémoire complémentaire se terminent sur les dernières sorties (B4, B3 ...) du commutateur ;

k 9) les liaisons passant par les cellules de mémoire de la mémoire complémentaire se terminent sur les premières sorties (B1, B2 ...) du commutateur ;

k 10) à l'intérieur des liaisons passant directement, la suite dans l'association des sorties (SP1, SP2 etc.) de la mémoire élastique vers les sorties (... B3, B4) du commutateur se fait dans le même sens ;

k 11) à l'intérieur des liaisons passant par les cellules de mémoire de la mémoire complémentaire, la suite dans l'association des sorties (... SP3, SP4) de la mémoire élastique vers les sorties (B1, B2 ...) du commutateur se fait dans le même sens.

7. Installation d'adaptation de la cadence dans la technique de transmission d'informations numériques selon la revendication 6, caractérisée en ce que :

- la commande (STG) est réalisée pour qu'en changeant de l'état final à l'état initial, une impulsion de cadence est éliminée de la cadence de lecture (LT).

8. Installation d'adaptation de la cadence dans la technique de transmission d'informations numériques selon la revendication 6, caractérisée en ce que :

a) la commande est réalisée pour qu'elle puisse en outre effectuer les fonctions suivantes :

a1) elle peut passer d'un état de commutation directement au second état suivant ou à un état de commutation encore plus loin, et
a2) lorsqu'un changement selon la caractéristique a1) englobe un changement d'un état final à un état initial, le mot de données appliqué aux sorties (SP1 ... SP4) de la mémoire élastique (ESPS) et le contenu de la mémoire complémentaire (ZSPS) restent conservés.

9. Installation d'adaptation de la cadence dans la technique de transformation d'informations numériques selon la revendication 8, caractérisée en ce que :

- la commande (STGS', figure 9) est réalisée pour éliminer une impulsion de la cadence de lecture (LT, figure 10) lorsqu'un changement selon la caractéristique a1) de la revendication 8) englobe un changement de l'état final à l'état initial.

Fig.1

EP 0 374 436 B1

Fig.2

# Fig.3

ZSPS

ZSP1    ZS1

ZSP2    ZS2

ZSP3    ZS3

ZSP4    ZS4

UMS

B1

B2

B3

B4

ESPS

ESP1    SP1

ESP2    SP2

ESP3    SP3

ESP4    SP4

LT

STGS

EP 0 374 436 B1

# Fig. 4a

### Schaltzustand: 1

# Fig. 4b

### Schaltzustand: 2

# Fig. 4c

### Schaltzustand: 3

# Fig. 4d

### Schaltzustand: 4

Fig.5a

Schaltzustand

1

Fig.5b

Schaltzustand

2

Fig.5c

Schaltzustand

3

Fig.5d

Schaltzustand

4

Fig. 6

hierzu Fig. 7a ... 7m

EP 0 374 436 B1

Fig.7a
Zeitpunkt: t1
ZSPS'
ESPS'
B1 12
B2 13
B3 14
B4 15
UMS'
9 10 11 12
13 14 15 16
Schaltzustand: 1

Fig.7b
Zeitpunkt: t2
ZSPS'
ESPS'
B1 16
B2 17
B3 18
B4 19
UMS'
13 14 15 16
17 18 19 20
Schaltzustand: 1

Fig.7c
Zeitpunkt: t3
ZSPS'
ESPS'
B1 20
B2 21
B3 22
B4 23
UMS'
17 18 19 20
21 22 23 24
Schaltzustand: 1

Fig.7d
Zeitpunkt: t4
ZSPS'
ESPS'
B1 23
B2 24
B3 25
B4 26
UMS'
21 22 23 24
25 26 27 28
Schaltzustand: 2

Fig.7e
Zeitpunkt: t5
ZSPS'
ESPS'
B1 27
B2 28
B3 29
B4 30
UMS'
25 26 27 28
29 30 31 32
Schaltzustand: 2

Fig.7f
Zeitpunkt: t6
ZSPS'
ESPS'
B1 30
B2 31
B3 32
B4 33
UMS'
29 30 31 32
33 34 35 36
Schaltzustand: 3

EP 0 374 436 B1

Fig.7g — Zeitpunkt: t7 — Schaltzustand: 3

Fig.7h — Zeitpunkt: t8 — Schaltzustand: 4

Fig.7i — Zeitpunkt: t9 — Schaltzustand: 4

Fig.7k — Zeitpunkt: t10 — Schaltzustand: 1

Fig.7l — Zeitpunkt: t11 — Schaltzustand: 1

Fig.7m — Zeitpunkt: t12 — Schaltzustand: 2

EP 0 374 436 B1

| B1 | 12 | 16 | 20 | 23 | 27 | 30 |
|----|----|----|----|----|----|----|
| B2 | 13 | 17 | 21 | 24 | 28 | 31 |
| B3 | 14 | 18 | 22 | 25 | 29 | 32 |
| B4 | 15 | 19 | 23 | 26 | 30 | 33 |

MS | 12 | 13 | 14 | 15 | 16 | 17 | 18 | 19 | 20 | 21 | 22 | 23 | 23 | 24 | 25 | 26 | 27 | 28 | 29 | 30 | 30 | 31 | 32 | 33 |

Sto          Sto

## Fig.8

| 34 | 37 | 41 | 44 | 48 | 51 |
|----|----|----|----|----|----|
| 35 | 38 | 42 | 45 | 49 | 52 |
| 36 | 39 | 43 | 46 | 50 | 53 |
| 37 | 40 | 44 | 47 | 51 | 54 |

| 34 | 35 | 36 | 37 | 37 | 38 | 39 | 40 | 41 | 42 | 43 | 44 | 44 | 45 | 46 | 47 | 48 | 49 | 50 | 51 | 51 | 52 | 53 | 54 |

Sto          Sto          Sto

Ursprung: Fig.7a...7m

Fig. 9

EP 0 374 436 B1

| hierzu Fig. | 7a | 7b | 7c | 7d | 7e | 11a | 11b | 11c | 11d |
| Zeitpunkt | t1 | t2 | t3 | t4 | t5 | t6 | t7 | t8 | t9 |

TT

STO1

STO2

LT

Schaltzustand      1         2        4        2

*Fig.10*

EP 0 374 436 B1

Fig.11a

Zeitpunkt: t6

Fig.11b

Zeitpunkt: t7

Fig.11c

Zeitpunkt: t8

Fig.11d

Zeitpunkt: t9

EP 0 374 436 B1

Ursprung: Fig. 7a     7b     7c     7d     7e     11a

| B1 | 12 | 16 | 20 | 23 | 27 | 29 |
| B2 | 13 | 17 | 21 | 24 | 28 | 30 |
| B3 | 14 | 18 | 22 | 25 | 29 | 31 |
| B4 | 15 | 19 | 23 | 26 | 30 | 32 |

MS | 12 | 13 | 14 | 15 | 16 | 17 | 18 | 19 | 20 | 21 | 22 | 23 | 23 | 24 | 25 | 26 | 27 | 28 | 29 | 30 | 29 | 30 | 31 | 32 |

Sto1          Sto2

**Fig.12**

    11b     11c     11d

| 33 | 35 | 39 |
| 34 | 36 | 40 |
| 35 | 37 | 41 |
| 36 | 38 | 42 |

| 33 | 34 | 35 | 36 | 35 | 36 | 37 | 38 | 39 | 40 | 41 | 42 |

Sto2

EP 0 374 436 B1

ZS1
ZS2
ZS3
ZS4
SP1
SP2
SP3

D1
D2
D3
D4

G1

G16

G17 — B1

G18 — B2

G19 — B3

G20 — B4

Fig.13

Fig.14

EP 0 374 436 B1

Schaltzustand: 1

Fig. 15a

Schaltzustand: 2

Fig. 15b

Schaltzustand: 3

Fig. 15c

Schaltzustand: 4

Fig. 15d

Schaltzustand: 5

Fig.15e

Schaltzustand: 6

Fig.15f

Schaltzustand: 7

Fig. 15g

Schaltzustand: 7

Fig. 15h

Schaltzustand: 1

Fig. 15 i

Schaltzustand: 8

Fig. 15 j

Schaltzustand: 5

Fig.15k

Schaltzustand: 5

Fig.15l

Schaltzustand: 1

Fig. 15m

Schaltzustand: 2

Fig. 15n

41

Schaltzustand: 3

Fig. 15o

Schaltzustand: 9

Fig. 15p

UME

DAR

ZWR

| 67 | | 63 | 59 |
| 68 | | 64 | 60 |
| S | | 65 | 61 |
| R | | 66 | 62 |

B1 | 62
B2 | 63
B3 | 64
B4 | 65

Schaltzustand: 7

Fig. 15q

UME

DAR

ZWR

| 69 | | 67 | 63 |
| 70 | | 68 | 64 |
| 71 | | S | 65 |
| 72 | | R | 66 |

B1 | 66
B2 | 67
B3 | 68
B4 | 69

Schaltzustand: 10

Fig. 15r

43

Schaltzustand: 10

Fig. 15 s

Schaltzustand: 3

Fig. 15 t